# EUROPEAN PATENT SPECIFICATION

(11) **EP 4 350 283 B1**
(45) Date of publication and mention of the grant of the patent: **09.12.2026**
(21) Application number: 22815597.4
(22) Date of filing: 02.03.2022
(51) Int. Cl.: G01C 3/06, G01S 7/4863, G01S 7/497, G01S 17/931, H04N 25/00, H04N 25/683, H04N 25/705, H04N 25/79, G01J 1/44, G01J 1/02

(54) **OPTICAL DETECTION DEVICE AND RANGING SYSTEM**
OPTISCHE DETEKTIONSVORRICHTUNG UND ENTFERNUNGSMESSSYSTEM
DISPOSITIF DE DÉTECTION OPTIQUE ET SYSTÈME DE TÉLÉMÉTRIE

(30) Priority: 04.06.2021 JP 2021094495
(43) Date of publication of application: 10.04.2024
(73) Proprietor: Sony Semiconductor Solutions Corporation, Atsugi-shi, Kanagawa 243-0014 (JP)
(72) Inventor: OTSUKI, Shuhei, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/008765
(87) International publication number: WO 2022/254839

(56) References cited:
- WO-A1-2017/209221
- JP-A- 2015 155 854
- JP-A- 2020 010 150
- US-A1- 2019 297 287

## Description

### Field

The present disclosure relates to a photodetection device and a distance measurement system.

### Background

In recent years, a distance measurement device (distance measurement system) that measures a distance by a Time of Flight (ToF) method has been gaining attention. As a light reception element included in the distance measurement system, there is a light reception element that uses a Single Photon Avalanche Diode (SPAD). The SPAD makes one photon light enter therein, multiplies electrons (charges) generated by photoelectric conversion in a PN junction area (avalanche multiplication), and thereby can accurately detect light. Furthermore, the distance measurement system can accurately measure a distance by detecting a timing at which the current of the multiplied electrons flows.

Patent Literature 4 discloses that the timing at which a row drive unit provided in a second substrate outputs a control signal for controlling accumulation and reading of pixel signals in a pixel array provided in a first substrate is compared with the timing at which the control signal output from the row drive unit is detected after passing through the pixel array. Depending on whether or not the timings coincides with each other, a failure is detected. Further disclosed is a corresponding an imaging apparatus mounted on a vehicle.

### Citation List

### Patent Literature

Patent Literature 1: JP 2020-143996 A
Patent Literature 2: JP 2020-112528 A
Patent Literature 3: JP 2020-112501 A
Patent Literature 4: US 2019/297287 A1

### Summary

### Technical Problem

In a case where a failure occurs in a control line electrically connected between each distance measurement device and a control unit that controls each light reception element or the like, the above-described distance measurement device may not be appropriately controlled, and an error may be included in a pixel signal from the light reception element. Furthermore, this case leads to malfunction of a system (an automatic traveling system or the like) that uses distance measurement information of the distance measurement device. Therefore, it is strongly demanded that the distance measurement device detects the above-described failure of the control line.

Therefore, the present disclosure proposes a photodetection device and a distance measurement system that can detect a failure of a control line.

### Solution to Problem

According to a first aspect the present disclosure provides a photodetection device in accordance with independent claim 1. According to a second aspect the present disclosure provides a distance measurement system in accordance with independent claim 14. Further aspects are set forth in the dependent claims, the drawings, and the following description.

According to the present disclosure, there is provided a photodetection device including: a light reception unit that includes a pixel array unit including a plurality of light reception elements aligned in a matrix; a control signal generation unit that generates a control signal; a control unit that is electrically connected with the light reception unit via a control line and controls the light reception unit based on the control signal; a processing unit that is electrically connected with the light reception unit via a signal line and processes an output signal from the light reception unit; and a failure determination unit that detects a failure. In the photodetection device, the failure determination unit detects a failure of the control line from the output signal from the light reception unit controlled based on a failure detection control signal having a predetermined pattern.

Furthermore, according to the present disclosure, there is provided a distance measurement system including: a lighting device that emits irradiation light; and a photodetection device that receives reflected light obtained when the irradiation light is reflected by a subject. In the distance measurement system, the photodetection device includes: a light reception unit that includes a pixel array unit including a plurality of light reception elements aligned in a matrix; a control signal generation unit that generates a control signal; a control unit that is electrically connected with the light reception unit via a control line and controls the light reception unit based on the control signal; a processing unit that is electrically connected with the light reception unit via a signal line and processes an output signal from the light reception unit; and a failure determination unit that detects a failure, the failure determination unit detects a failure of the control line from the output signal from the light reception unit controlled based on a failure detection control signal having a predetermined pattern.

### Brief Description of Drawings

FIG. 1 is a view schematically illustrating distance measurement of a direct ToF method applicable to an embodiment of the present disclosure.
FIG. 2 is a view illustrating an example of a histogram that is applicable to an embodiment of the present disclosure and based on a time at which a light reception unit receives light.
FIG. 3 is a block diagram illustrating an example of a configuration of a distance measurement system to which the embodiment of the present disclosure is applicable.
FIG. 4 is a block diagram illustrating an example of a configuration of a distance measurement device to which the embodiment of the present disclosure is applicable.
FIG. 5 is a circuit diagram illustrating an example of a configuration of a pixel circuit to which the embodiment of the present disclosure is applicable.
FIG. 6 is an explanatory view illustrating an example of connection between a plurality of pixel circuits to which the embodiment of the present disclosure is applicable.
FIG. 7 is a schematic view illustrating an example of a stacked structure of the distance measurement device to which the embodiment of the present disclosure is applicable.
FIG. 8 is a block diagram illustrating a configuration of part of the distance measurement device according to the embodiment of the present disclosure.
FIG. 9 is an explanatory view for describing an outline of the embodiment of the present disclosure.
FIG. 10 is a flowchart of a processing procedure according to the embodiment of the present disclosure.
FIG. 11 is a flowchart for describing an outline of a flow of SPAD access check according to the embodiment of the present disclosure.
FIG. 12 is a table illustrating a control signal pattern for failure check of an I_SPAD line.
FIG. 13 is an explanatory view for describing details of control signal patterns for failure check of the I_SPAD line.
FIG. 14 is a table illustrating control signal patterns for failure check of an EN_VLINE line and an EN_AREA line.
FIG. 15 is an explanatory view for describing details of a control signal pattern for failure check of the EN_VLINE line and the EN_AREA line.
FIG. 16 is a table illustrating control signal patterns for failure check of an ACT_SPAD_V line and an ACT_SPAD_H line.
FIG. 17 is an explanatory view for describing details of control signal patterns for failure check of the ACT_SPAD_V line and the ACT_SPAD_H line.
FIG. 18 is a table illustrating a control signal pattern for failure check of a downsampling circuit.
FIG. 19 is an explanatory view for describing details of a control signal pattern for failure check for failure check of the downsampling circuit.
FIG. 20 is a view illustrating an example of a timing chart at a time of failure detection.
FIG. 21 is a block diagram illustrating a configuration example of a vehicle control system.
FIG. 22 is a view illustrating an example of sensing areas.

### Description of Embodiments

Hereinafter, a preferred embodiment of the present disclosure will be described in detail with reference to the accompanying drawings. Note that, in the description and the drawings, components employing substantially the same functional configurations will be assigned the same reference numerals, and redundant description will be omitted. Furthermore, in the description and the drawings, a plurality of components employing substantially the same or similar functional configurations are distinguished by assigning different alphabets to ends of the same reference numerals in some cases. In this regard, in a case where it is not particularly necessary to distinguish each of a plurality of components employing substantially the same or similar functional configurations, only the same reference numeral is assigned.

Furthermore, in the following description of circuits (electrical connection), "electrically connect" means establishing connection to conduct electricity (signals) between a plurality of elements unless otherwise specified. Furthermore, "electrically connect" in the following description includes not only a case of directly and electrically connecting a plurality of elements, but also a case of indirectly and electrically connecting a plurality of elements via other elements.

Note that the description will be given in the following order.
1. Background That Inventors of Present Disclosure Have Come to Creating Embodiment of Present Disclosure
   1.1 Distance Measurement Method
   1.2 Distance Measurement System
   1.3 Distance Measurement Device
   1.4 Pixel Circuit
   1.5 Stacked Structure
   1.6 Background
2. Embodiment
   2.1 Distance Measurement Device
   2.2 Processing Procedure
3. Conclusion
4. Application Example

### <<1. Background That Inventors of Present Disclosure Have Come to Creating Embodiment of Present Disclosure>>

### <1.1 Distance Measurement Method>

First, before describing the embodiment of the present disclosure, the background that the inventors of the present disclosure have come to creating the embodiment of the present disclosure will be described, and, first, an outline of a distance measurement method to which each embodiment of the present disclosure is applicable will be described. The present disclosure relates to a technique that performs distance measurement using light. In the embodiment of the present disclosure, a direct Time of Flight (ToF) method is applied as the distance measurement method. The direct ToF method is a method for making a light reception element (more specifically, an SPAD) receive reflected light obtained when light emitted from a light source is reflected by a measurement target, and performing distance measurement based on time of a difference between a light emission timing and a light reception timing.

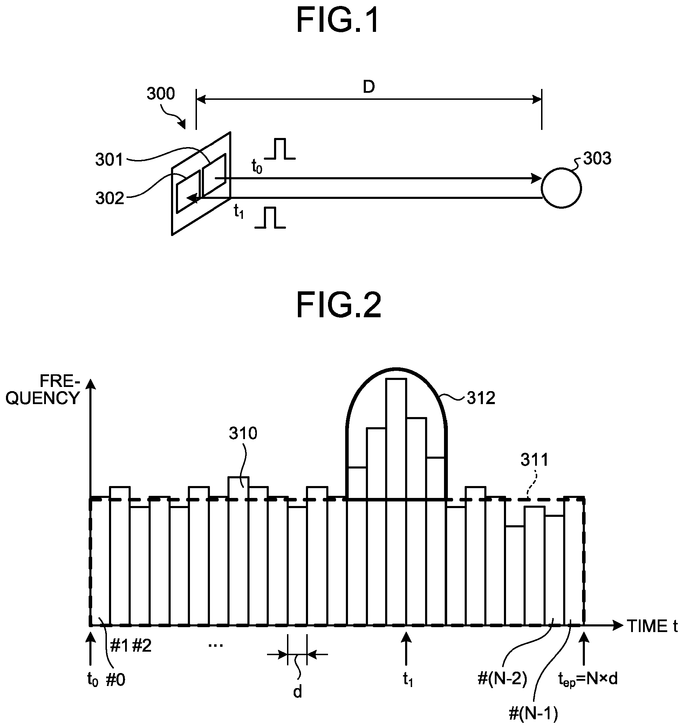

An outline of distance measurement by the direct ToF method will be described with reference to FIGS. 1 and 2. FIG. 1 is a view schematically illustrating distance measurement by the direct ToF method applicable to the embodiment of the present disclosure, and FIG. 2 is a view illustrating an example of a histogram that is applicable to the embodiment of the present disclosure and is based on a time at which a light reception unit 302 receives light.

As illustrated in FIG. 1, a distance measurement device 300 includes a light source unit (lighting device) 301 and the light reception unit 302. The light source unit 301 is, for example, a laser diode, and is driven to emit laser light in a pulse shape. The light emitted from the light source unit 301 is reflected by a measurement target (subject) 303, and is received by the light reception unit 302 as reflected light. The light reception unit 302 includes a plurality of light reception elements that convert light into an electrical signal by photoelectric conversion, and can output a pixel signal corresponding to the received light.

Here, a time (light emission timing) at which the light source unit 301 emits light is t₀, and a time (light reception timing) at which the light reception unit 302 receives reflected light obtained when light emitted from the light source unit 301 is reflected by the measurement target 303 is a time t₁. Assuming that a constant c is a light velocity (2.9979 × 10⁸ [m/sec]), a distance D between the distance measurement device 300 and the measurement target 303 is expressed by following equation (1). $D = \left(c/2\right) \times \left({t}_{1}-{t}_{0}\right)$ (1)

The distance measurement device 300 can repeatedly execute the above-described processing a plurality of times. The light reception unit 302 may include a plurality of light reception elements, and calculate the distance D based on each light reception timing at which the reflected light is received by each light reception element. The distance measurement device 300 classifies a time tₘ (referred to as the light reception time tₘ) from the time t₀ of the light emission timing to the light reception timing at which the light is received by the light reception unit 302 based on a class (bins), and generates a histogram.

Note that the light received by the light reception unit 302 at the light reception time tₘ is not limited to reflected light obtained when the light emitted by the light source unit 301 is reflected by the measurement target 303. For example, ambient light around the distance measurement device 300 (light reception unit 302) is also received by the light reception unit 302.

In the histogram illustrated in FIG. 2, the horizontal axis indicates a bin, and the vertical axis indicates a frequency per bin. The bin is obtained by classifying the light reception time tₘ per predetermined unit time d. More Specifically, a bin #0 is 0 ≤ tₘ < d, a bin #1 is d ≤ tₘ < 2×d, a bin #2 is 2×d ≤ tₘ < 3×d, ..., and a bin #(N-2) is (N-2) ×d ≤ tₘ < (N-1) ×d. In a case where an exposure time of the light reception unit 302 is a time tₑₚ, tₑₚ = N×d holds.

The distance measurement device 300 counts the number of times of acquisition of the light reception time tₘ based on the bin, obtains the frequency 310 per bin, and generates a histogram. Here, the light reception unit 302 also receives light other than the reflected light obtained when the light emitted from the light source unit 301 is reflected. Examples of such light other than the target reflected light include the above-described ambient light. A portion of the histogram indicated by a range 311 includes an ambient light component of the ambient light. The ambient light is light that is randomly incident on the light reception unit 302, and is noise for target reflected light.

On the other hand, the target reflected light is light that is received according to a specific distance, and appears as an active light component 312 in the histogram. A bin associated with the frequency of a peak in this active light component 312 is a bin associated with the distance D of the measurement target 303. By acquiring a representative time of this bin (e.g., the time at the center of the bin) as the above-described time t₁, the distance measurement device 300 can calculate the distance D to the measurement target 303 according to above-described equation (1). As described above, by using a plurality of light reception results, it is possible to execute appropriate distance measurement even when random noise occurs.

### <1.2 Distance Measurement System>

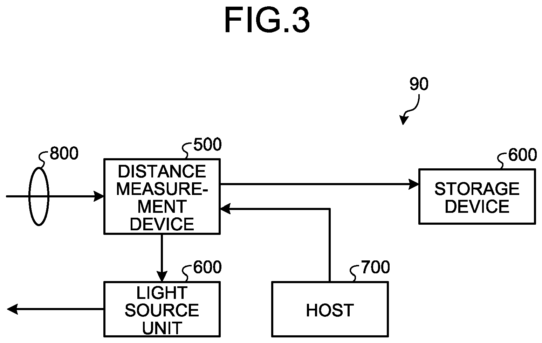

Next, an example of a configuration of a distance measurement system 90 to which the embodiment of the present disclosure is applicable will be described with reference to FIG. 3. FIG. 3 is a block diagram illustrating the example of the configuration of the distance measurement system 90 to which the embodiment of the present disclosure is applicable. As illustrated in FIG. 3, the distance measurement system 90 can mainly include a light source unit (lighting device) 400, a distance measurement device 500, a storage device 600, a host 700, and an optical system 800. Hereinafter, each block included in the distance measurement system 90 will be sequentially described.

### (Light Source Unit 400)

The light source unit 400 corresponds to the above-described light source unit 301 in FIG. 1, includes a laser diode or the like, and is driven to emit, for example, laser light in a pulse shape. As the light source unit 400, a Vertical Cavity Surface Emitting Laser (VCSEL) that emits laser light is applicable as a surface light source. Furthermore, as the light source unit 400, an array formed by aligning laser diodes on a line may be used, and a configuration to scan laser light emitted from the laser diode array in a direction vertical to the line may be used. Furthermore, as the light source unit 400, a laser diode that is a single light source may be used, and a configuration to scan laser light emitted from the laser diode in horizontal and vertical directions may be used.

### (Distance Measurement Device 500)

The distance measurement device 500 includes the above-described light reception unit 302 in FIG. 1. Furthermore, the light reception unit 302 includes, for example, a pixel array unit (not illustrated) including a plurality of light reception elements aligned in a two-dimensional lattice pattern (matrix) (e.g., 189 light reception elements × 600 light reception elements). Note that details of the distance measurement device 500, the light reception unit 302, and the like will be described later. Furthermore, the optical system 800 can guide light incident from the outside to the above pixel array unit of the light reception unit 302 of the distance measurement device 500.

Furthermore, the distance measurement device 500 counts within a predetermined time range the number of times of acquisition of time information (light reception time tₘ) indicating a timing at which the light is received by the above pixel array unit, obtains the frequency per bin, and generates the above-described histogram. Furthermore, the distance measurement device 500 calculates the distance D to the measurement target 303 based on the generated histogram. Information indicating the calculated distance D is stored in, for example, the storage device 600.

### (Host 700)

The host 700 can control the entire operation of the distance measurement system 90. For example, the host 700 supplies to the distance measurement device 500 a light emission trigger that is a trigger for causing the light source unit 400 to emit light. The distance measurement device 500 causes the light source unit 400 to emit light at a timing based on this light emission trigger, and stores the time t₀ indicating the light emission timing. Furthermore, the host 700 may set a pattern at the time of distance measurement to the distance measurement device 500 according to, for example, an instruction from the outside.

### <1.3 Distance Measurement Device>

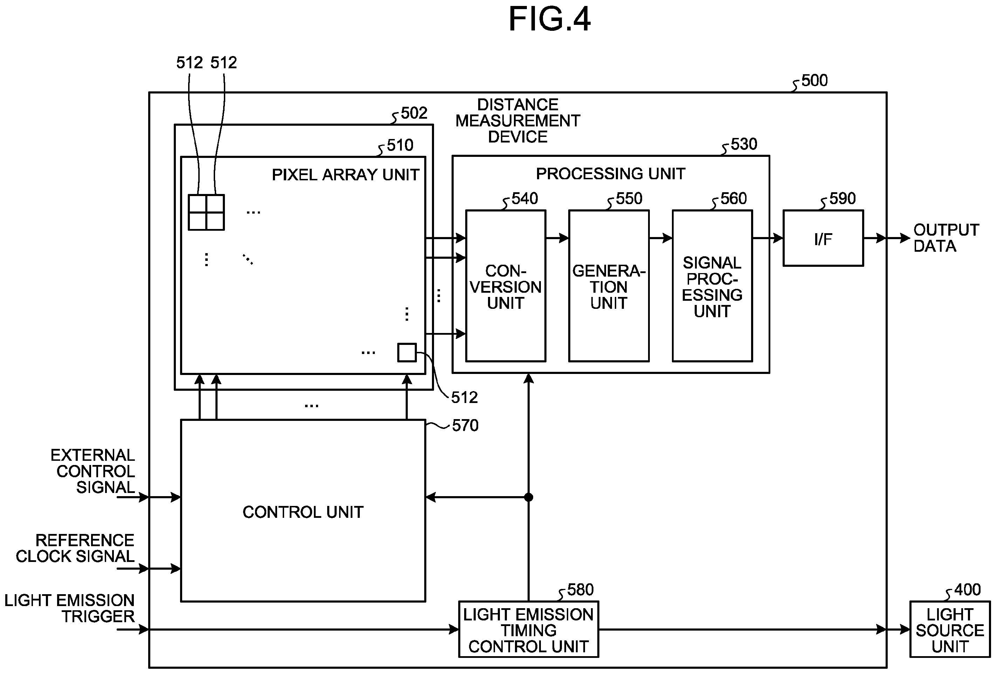

Next, an example of a configuration of the distance measurement device 500 to which the embodiment of the present disclosure is applicable will be described with reference to FIG. 4. FIG. 4 is a block diagram illustrating the example of the configuration of the distance measurement device 500 to which the embodiment of the present disclosure is applicable. As illustrated in FIG. 4, the distance measurement device 500 mainly includes a light reception unit 502 including a pixel array unit 510, a processing unit 530, a control unit 570, a light emission timing control unit 580, and an interface (I/F) 590. Hereinafter, each block included in the distance measurement device 500 will be sequentially described.

### (Light Reception Unit 502)

As illustrated in FIG. 4, the light reception unit 502 includes the pixel array unit 510. Furthermore, the pixel array unit 510 includes a plurality of SPADs (light reception elements) 512 aligned in a matrix (for example, 189 light reception elements × 600 light reception elements are aligned). Each SPAD 512 is controlled by the control unit 570 described later. For example, the control unit 570 can control reading of a pixel signal from each SPAD 512 per block including the (p×q) SPADs 512 of the p SPADs 512 in a row direction and the q SPADs 512 in a column direction. Furthermore, the control unit 570 can scan each SPAD 512 in the row direction and further scan each SPAD 512 in the column direction in units of the above blocks, and read the pixel signal from each SPAD 512. Note that details of the light reception unit 502 will be described later.

### (Processing Unit 530)

The processing unit 530 can process a pixel signal read from each SPAD 512 via a signal line. As illustrated in FIG. 4, the processing unit 530 includes a conversion unit 540, a generation unit 550, and a signal processing unit 560.

First, the pixel signal read from each SPAD 512 and output from the pixel array unit 510 is supplied to the conversion unit 540. The conversion unit 540 converts the pixel signal supplied from the pixel array unit 510 into digital information. More specifically, the conversion unit 540 converts the pixel signal supplied from the pixel array unit 510 into time information indicating the timing at which light is received by the SPAD 512 associated with the pixel signal.

The generation unit 550 generates a histogram based on the time information obtained by converting the pixel signal by the conversion unit 540.

The signal processing unit 560 performs predetermined computation processing based on data of the histogram generated by the generation unit 550, and calculates, for example, distance information. The signal processing unit 560 creates an approximate curve of the histogram based on, for example, the data of the histogram generated by the generation unit 550. The signal processing unit 560 can detect a peak of the curve to which this histogram has been approximated, and obtain the distance D (an example of the distance measurement information) based on the detected peak. Note that, when approximating the curve of the histogram, the signal processing unit 560 may perform filter processing on the curve to which the histogram has been approximated. For example, the signal processing unit 560 can suppress a noise component by performing lowpass filter processing on the curve to which the histogram has been approximated.

Furthermore, the distance information obtained by the signal processing unit 560 is supplied to the interface 590. The interface 590 functions as an output unit that outputs to the outside as output data the distance information supplied from the signal processing unit 560. As the interface 590, for example, a Mobile Industry Processor Interface (MIPI) is applicable. Note that, in the above description, the distance information is output to the outside via the interface 590, yet is not limited to this example. That is, histogram data that is the data of the histogram generated by the generation unit 550 may be configured to be output from the interface 590 to the outside. In this case, the histogram data output from the interface 590 is supplied to, for example, an external information processing device and processed as appropriate.

### (Control Unit 570)

The control unit 570 can control the light reception unit 502 and the like based on a control signal or a reference clock signal supplied from the outside according to, for example, a program installed in advance. Furthermore, as described above, the control unit 570 can set a predetermined area of the pixel array unit 510 as a target area, and control the SPADs 512 included in the target area as a target from which the pixel signal is read. Furthermore, the control unit 570 can collectively scan a plurality of rows (a plurality of lines) and further scan the rows in the column direction, and read the pixel signal from each SPAD 512.

### (Light Emission Timing Control Unit 580)

The light emission timing control unit 580 generates a light emission control signal indicating a light emission timing according to a light emission trigger signal supplied from the outside. The light emission control signal is supplied to the light source unit 400, and is also supplied to the processing unit 530.

### <1.4 Pixel Circuit>

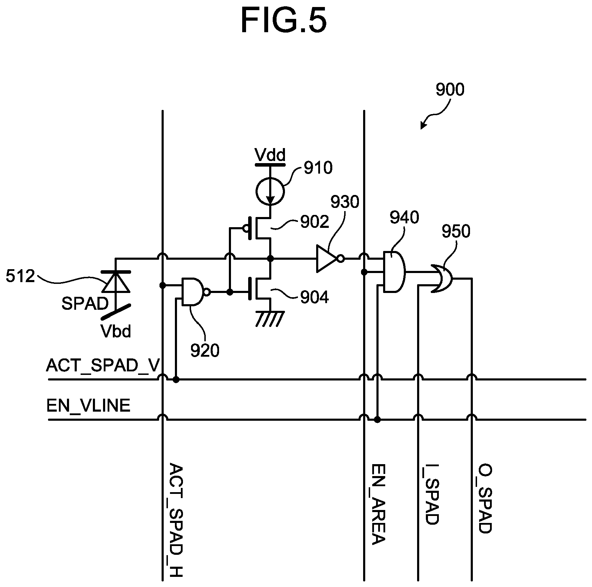

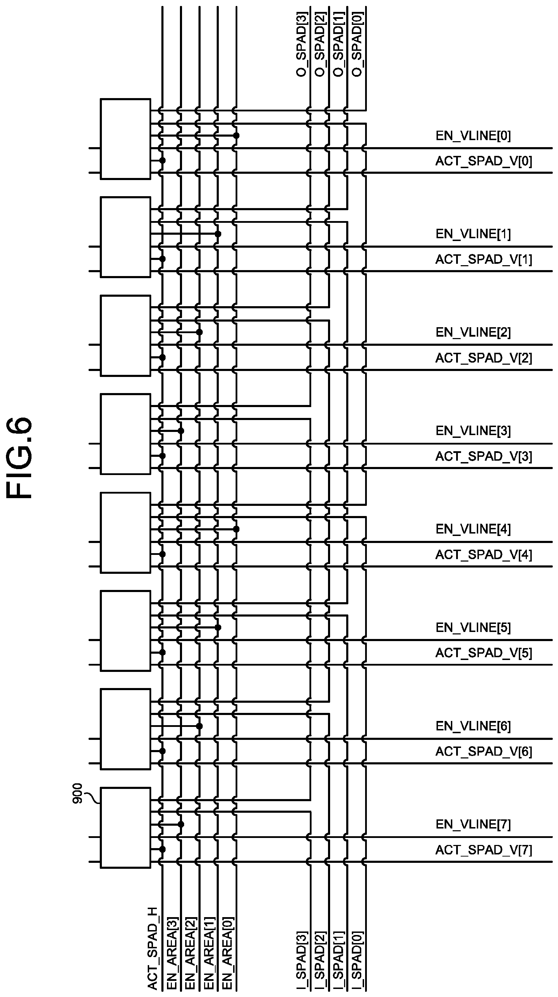

More specifically, the above-described light reception unit 502 includes a plurality of pixel circuits 900 that each include the plurality of SPADs 512. Hereinafter, an example of a configuration of the pixel circuit 900 to which the embodiment of the present disclosure is applicable will be described with reference to FIGS. 5 and 6. FIG. 5 is a circuit diagram illustrating the example of the configuration of the pixel circuit 900 to which the embodiment of the present disclosure is applicable, and FIG. 6 is an explanatory view illustrating an example of connection between the plurality of pixel circuits 900.

As illustrated in FIG. 5, the pixel circuit 900 includes the SPAD (light reception element) 512, transistors 902 and 904, a constant current source 910, switch circuits 920 and 940, an inverter circuit 930, and an OR circuit (logical add circuit) 950.

The SPAD 512 is a single photon avalanche diode that converts incident light into an electrical signal by photoelectric conversion, and outputs the electrical signal. In the embodiment of the present disclosure, the SPAD 512 converts an incident photon (photon) into an electrical signal by photoelectric conversion, and outputs a pulse corresponding to the incident photons. The SPAD 512 has characteristics that, when a large negative voltage that causes avalanche multiplication is applied to the cathode, electrons produced in response to incidence of one photon cause the avalanche multiplication, and a large current flows. By using such characteristics of the SPAD 512, it is possible to detect incidence of one photon with high sensitivity.

The cathode of the SPAD 512 is connected to a coupling part of the two transistors 902 and 904 and an input of the inverter circuit 930. Furthermore, the anode of the SPAD 512 is electrically connected to a voltage source of a voltage (-Vbd). The voltage (-Vbd) is a large negative voltage for causing avalanche multiplication for the SPAD 512.

The transistor 902 is a P-channel Metal Oxide Semiconductor Field Effect Transistor (MOSFET), the transistor 904 is an N-channel MOSFET, and the transistors 902 and 904 are electrically connected to each other via the source and the drain. Furthermore, the gates of the transistors 902 and 904 are electrically connected with the switch circuit 920. Furthermore, the source of the transistor 902 is electrically connected to a power supply voltage Vdd via the constant current source 910.

The switch circuit (driving switch) 920 includes an NAND circuit, and functions as a switch that drives the SPAD 512 according to the control signal from the above-described control unit 570. More specifically, the switch circuit 920 controls the transistors 902 and 904 based on the above control signals from an ACT_SPAD_V line and an ACT_SPAD_H line (first and third control lines), and applies a reverse bias to the SPAD 512. Furthermore, applying the reverse bias places the SPAD 512 in an active state, avalanche multiplication is started when a photon is incident on the SPAD 512 in this state, and a current flows from the cathode to the anode of the SPAD 512.

More specifically, each of the ACT_SPAD_V line and the ACT_SPAD_H line can transmit a control signal of the pixel array unit 510 to the switch circuit 920 of the pixel circuit 900. Such a control signal makes it possible to control the on state/off state of the switch circuit 920 per pixel circuit 900. Note that, while the on state of the switch circuit 920 can place the SPAD 912 in an activate, the off state of the switch circuit 920 can place the SPAD 912 in an inactive state. Consequently, it is possible to suppress power consumption of the SPAD 512 in the pixel array unit 510.

Furthermore, the pixel signal from the SPAD 512 is input to the inverter circuit 930. The inverter circuit 930 performs, for example, threshold determination on the input pixel signal, inverts the pixel signal every time the pixel signal exceeds the threshold in a positive direction or a negative direction, and outputs a pulse-shaped signal.

The pulse signal output from the inverter circuit 930 is input to the switch circuit (output switch) 940. The switch circuit 940 is an AND circuit, and functions as a switch that controls output of the pixel signal from the SPAD 512 according to the control signal from the above-described control unit 570. More specifically, the switch circuit 940 outputs the above pulse signal to the OR circuit 950 based on the above control signals from an EN_VLINE line and an EN_AREA line (second and fourth control lines).

More specifically, the EN_VLINE line and the EN_AREA line can each transmit the control signal of the pixel array unit 510 to the switch circuit 940 of the pixel circuit 900. Such a control signal makes it possible to control the on state/off state of the switch circuit 940 per pixel circuit 900, and, as a result, control whether to enable or disable an output of each SPAD 512.

The OR circuit 950 has the one input to which the output of the switch circuit 940 is input, and the other input to which the output of the switch circuit 940 of the another pixel circuit 900 or a control signal in a horizontal direction from the above-described control unit 570 is input via an I_SPAD line (fifth control line). Furthermore, the OR circuit 950 provides an output according to the input signal. More specifically, in the plurality of SPADs 512 located in the same column, the SPADs 512 adjacent to each other across a predetermined number of rows (e.g., 20 rows) are daisy-chained. Furthermore, one end of the daisy chain is electrically connected with the control unit 570, and the other end is connected to the processing unit 530 (more specifically, a downsampling circuit (not illustrated)). By so doing, it is possible to reduce the circuit scale of the processing unit 530 (more specifically, it is possible to reduce the number of the above downsampling circuits).

Furthermore, in a case of, for example, 4 SPAD cycles, the plurality of pixel circuits 900 can be connected as illustrated in FIG. 6.

### <1.5 Stacked Structure>

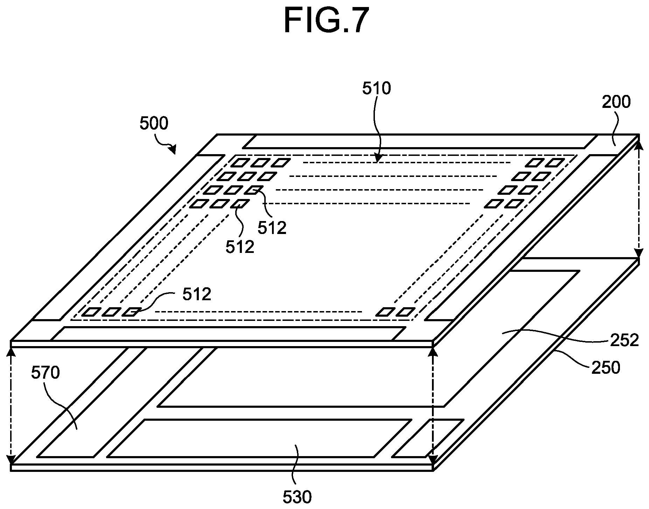

Furthermore, the distance measurement device 500 to which the embodiment of the present disclosure is applicable can have a stacked structure formed by stacking a plurality of semiconductor substrates. Hereinafter, an example of the stacked structure of the distance measurement device 500 to which the embodiment of the present disclosure is applicable will be described with reference to FIG. 7. FIG. 7 is a schematic view illustrating an example of the stacked structure of the distance measurement device 500 to which the embodiment of the present disclosure is applicable.

As illustrated in FIG. 7, the distance measurement device 500 has the stacked structure formed by stacking two semiconductor substrates (first and second substrates) 200 and 250. Note that these semiconductor substrates 200 and 250 may be referred to as semiconductor chips.

More specifically, the above-described pixel array unit 510 is provided on the semiconductor substrate (first substrate) 200 illustrated on the upper side in FIG. 7, and the SPADs 512 included in each of the plurality of pixel circuits 900 are aligned in a matrix in the area of the pixel array unit 510. Furthermore, the transistors 902 and 904, the constant current source 910, the switch circuits 920 and 940, the inverter circuit 930, and the OR circuit 950 in the pixel circuit 900 are provided on the semiconductor substrate 250 illustrated on the lower side in FIG. 7. Note that the SPADs 512 can be electrically connected with each element on the semiconductor substrate 250 by, for example, Copper-Copper Connection (CCC) or the like.

The semiconductor substrate 250 is provided with a logic array unit 252 including the transistors 902 and 904, the constant current source 910, the switch circuits 920 and 940, the inverter circuit 930, and the OR circuit 950 in the pixel circuit 900. Furthermore, the processing unit 530 that processes the pixel signal acquired by the SPAD 512, the control unit 570 that controls the operation of the distance measurement device 500, and the like can be provided on the semiconductor substrate 250 and close to the logic array unit 252. Furthermore, control lines such as the above-described ACT_SPAD_V line, ACT_SPAD_H line, EN_VLINE line, EN_AREA line, and I_SPAD line are provided on the semiconductor substrate 250.

Note that layouts on the semiconductor substrates 200 and 250 are not limited to the configuration example illustrated in FIG. 7, and various layouts can be selected. Furthermore, the distance measurement device 500 is not limited to the distance measurement device formed by stacking the plurality of semiconductor substrates, and may include one semiconductor substrate.

### <1.6 Background>

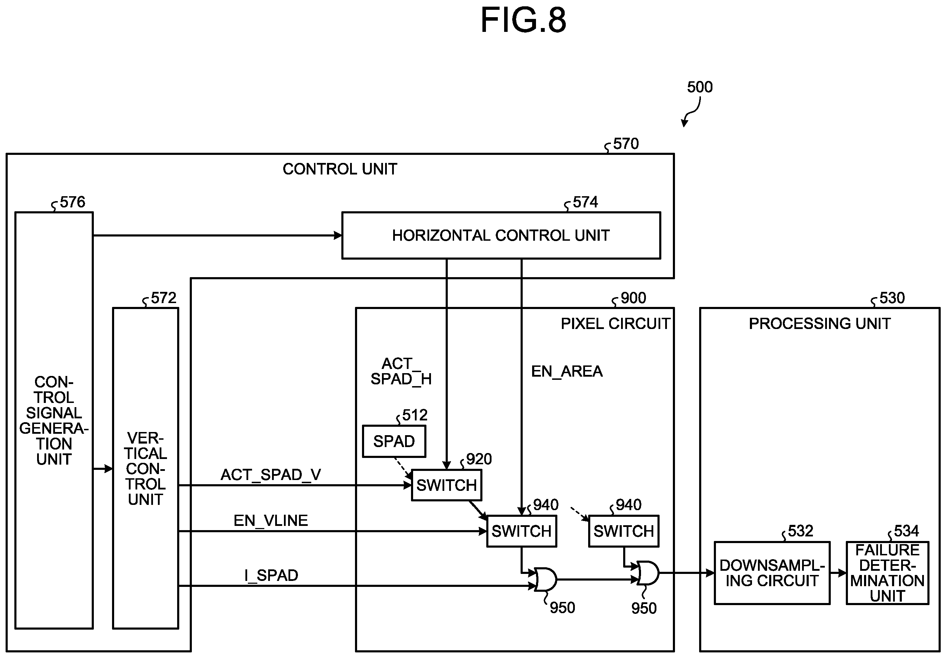

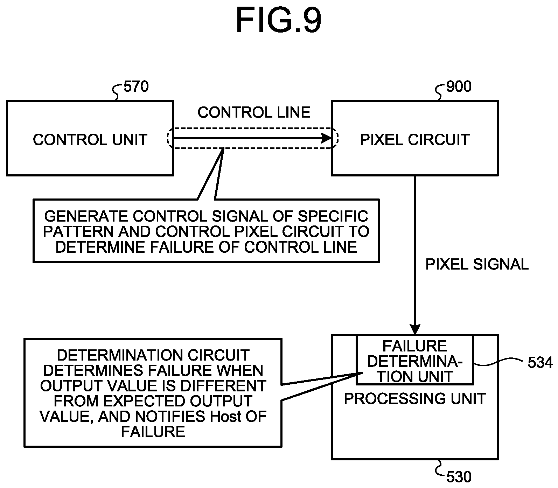

Next, details of the background that the inventors of the present disclosure have come to creating the embodiment of the present disclosure will be described with reference to FIGS. 8 and 9 in view of the above-described configuration example of the distance measurement device 500. FIG. 8 is a block diagram illustrating a configuration of part of the distance measurement device 500 according to the embodiment of the present disclosure, and FIG. 9 is an explanatory view for describing an outline of the embodiment of the present disclosure.

As illustrated in FIG. 8, the control unit 570 can control the pixel circuit 900 via a plurality of control lines (more specifically, the above-described ACT_SPAD_V line, ACT_SPAD_H line, EN_VLINE line, EN_AREA line, I_SPAD line, and like). However, in a case where a failure occurs in such a control line, there may be a case as described above where appropriate control is not performed and therefore an error is included in the pixel signal from the pixel circuit 900. Furthermore, this case leads to malfunction of a system that uses the distance measurement information of the distance measurement device 500. Therefore, it is strongly demanded that the distance measurement device 500 detects the above-described failure of the control line.

However, detection of a failure of a control line has not been studied in detail for many of the conventional distance measurement devices 500. Furthermore, even in a case where means for detecting a failure is provided, it has not been possible to separately detect whether the failure is a failure of the pixel circuit 900 or a failure of the control line. Furthermore, it takes a lot of time to detect a failure and it is required to perform measurement under predetermined conditions (a state where no light is emitted, a state where predetermined light is emitted, and the like) to acquire a reference value for failure detection in advance, and therefore it has not been easy to frequently perform failure detection.

Therefore, the inventors of the present disclosure have come to creating the embodiment of the present disclosure described below in view of such a situation. In the embodiment of the present disclosure, it is possible to detect a failure of a control line. More specifically, in the embodiment created by the inventors of the present disclosure, as illustrated in FIG. 9, a failure detection control signal having a predetermined pattern is generated, and the control unit 570 controls the pixel circuit 900 based on the generated failure detection control signal to detect a failure of a control line. Next, a failure determination unit 534 provided in the processing unit 530 acquires the pixel signal output from the pixel circuit 900 controlled based on the failure detection control signal, determines a failure of a control line when the acquired pixel signal is different from an expected output value, and notifies the host 700 or the like of the failure.

According to the embodiment of the present disclosure created by the inventors of the present disclosure, it is possible to detect a failure of a control line. Furthermore, according to the present embodiment, the distance measurement device 500 alone can detect the above failure without receiving an instruction from the host 700 during the operation of the distance measurement device 500. Furthermore, in the present embodiment, it is not necessary to irradiate the light reception unit 502 (pixel array unit 510) with light, and a signal serving as a reference for determination is not acquired in advance, so that it is possible to easily detect a failure. Hereinafter, details of each embodiment of the present disclosure will be sequentially described.

### <<2. Embodiment>>

### <2.1 Distance Measurement Device>

First, main units of a configuration of the distance measurement device 500 according to the embodiment of the present disclosure will be described with reference to FIG. 8. As illustrated in FIG. 8, the distance measurement device 500 mainly includes the pixel circuit 900, the control unit 570, and the processing unit 530. Hereinafter, each block included in the distance measurement device 500 will be sequentially described, and description of portions overlapping those of the distance measurement device 500 described above will be omitted.

### (Pixel Circuit 900)

As illustrated in FIG. 8, the pixel circuit 900 includes the SPAD (light reception element) 512, the switch circuits 920 and 940, and the OR circuit (logical add circuit) 950. The switch circuit (driving switch) 920 functions as a switch that drives the SPAD 512 according to control signals from a vertical control unit 572 and a horizontal control unit 574 of the control unit 570 via the ACT_SPAD_V line and the ACT_SPAD_H line (first and third control lines). Furthermore, the switch circuit (output switch) 940 functions as a switch that controls output of the pixel signal from the SPAD 512 according to the control signals from the vertical control unit 572 and the horizontal control unit 574 of the control unit 570 via the EN_VLINE line and the EN_AREA line (second and fourth control lines). Furthermore, the OR circuit (logical add circuit) 950 can output the pixel signal of the SPAD 512 to a downsampling circuit 532 of the processing unit 530 according to the control signal from the vertical control unit 572 of the control unit 570 via the I_SPAD line (fifth control line). Note that the downsampling circuit 532 may include a column shift circuit (not illustrated) that cancels noise.

### (Control Unit 570)

As illustrated in FIG. 8, the control unit 570 includes the vertical control unit (row direction readout control unit) 572, the horizontal control unit (column direction readout control unit) 574, and a control signal generation unit 576. The vertical control unit 572 can control the pixel circuits 900 (more specifically, operations and output of the SPADs 512) in the vertical direction, that is, in units of rows. Furthermore, the vertical control unit 572 can also control the above-described OR circuit 950. Furthermore, the horizontal control unit 574 can control the pixel circuits 900 (more specifically, the operations and output of the SPADs 512) in the horizontal direction, that is, in units of columns.

Furthermore, the control signal generation unit 576 can generate control signals, and output the control signals to the above-described vertical control unit 572 and horizontal control unit 574. More specifically, the control signal generation unit 576 can generate a failure detection control signal having a predetermined pattern to detect, for example, failures of various control lines, and output the failure detection control signal to the above-described vertical control unit 572 and horizontal control unit 574.

### (Processing Unit 530)

As illustrated in FIG. 8, the processing unit 530 mainly includes the downsampling circuit 532 and the failure determination unit 534. The downsampling circuit 532 converts into a digital signal a pixel signal read from the pixel circuit 900 via a signal line and subjected to signal processing such as noise cancelling in the unillustrated column shift circuit. Furthermore, the downsampling circuit 532 outputs the pixel signal converted into the digital signal to the failure determination unit 534 described later.

Furthermore, the failure determination unit 534 acquires the pixel signal (output signal) from the pixel circuit 900 controlled by the failure detection control signal, determines whether or not the acquired pixel signal is different from an expected output value, determines that the control line has caused a failure when the acquired pixel signal is different from the expected output value, and notifies the host 700 or the like of the failure.

Note that the present embodiment is not limited to the configuration in FIG. 8 illustrating the main units of the configuration of the distance measurement device 500, and other elements and the like may be added.

### <2.2 Processing Procedure>

### (Outline of Processing Procedure)

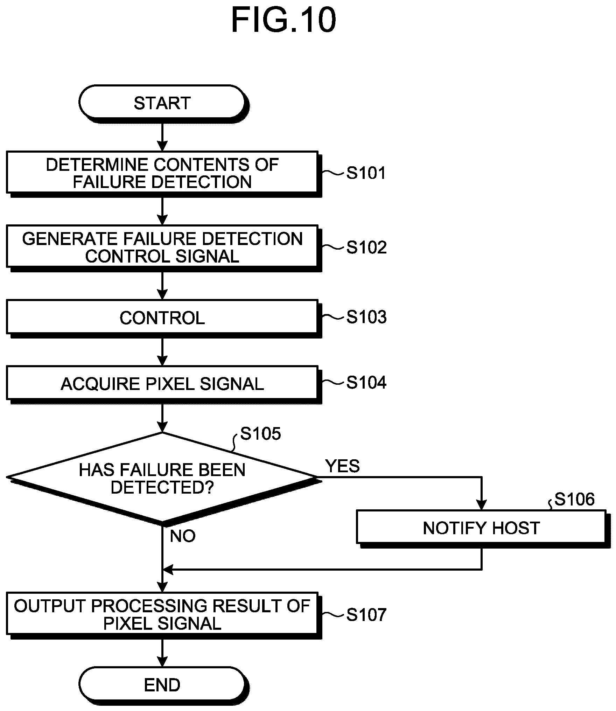

Next, the outline of the processing procedure according to the present embodiment will be described with reference to FIG. 10. FIG. 10 is a flowchart of the processing procedure according to the present embodiment. As illustrated in FIG. 10, the processing procedure according to the present embodiment can mainly include a plurality of steps of step S101 to step S107. Details of these respective steps according to the present embodiment will be described below.

The processing for failure detection according to the present embodiment is performed during the operation of the distance measurement device 500 and while the frame synchronization signal is inactive. Furthermore, the processing is repeatedly performed at a suitable frequency during the operation of the distance measurement device 500.

First, the distance measurement device 500 determines contents of failure detection (step S101). For example, in the present embodiment, in addition to detection of a failure of a control line (SPAD access check), a failure of the processing unit 530 may be detected (data path check), or a failure of the pixel circuit 900 (light reception unit) may be detected (SPAD check). In the present embodiment, it is concerned that, when the processing unit 530 causes a failure, a failure of the control line or the pixel circuit 900 cannot be detected, and therefore it is preferable to perform the above data path check first. That is, it is preferable to perform the above data path check, then SPAD access check, and SPAD check in order. However, in the present embodiment, the order of the SPAD access check and the SPAD check is not limited, and may be reversed, and only one failure detection may be executed. Note that, in the present embodiment, whether to execute each failure detection can be selected by an enable register that supports each failure detection.

As described above, according to the present embodiment, it is possible to specify a failure portion by sequentially performing failure detection at different portions.

Next, the distance measurement device 500 generates a failure detection control signal having a predetermined pattern for performing failure detection in predetermined order based on the determination in above-described step S101 (step S102). In a case where, for example, data path check, SPAD access check, and SPAD check are performed in this order, a control signal for the data path check, a control signal for the SPAD access check, and then a control signal for the SPAD check are arranged in this order in the failure detection control signal.

Furthermore, the distance measurement device 500 performs control for failure detection using the failure detection control signal generated in above-described step S102 (step S103).

Next, the distance measurement device 500 acquires the pixel signal from the SPAD 512 under the control in above-described step S103 (step S104).

Furthermore, the distance measurement device 500 determines whether a failure has been detected (step S105). More specifically, in a case where, for example, the pixel signal acquired in above-described step S104 is different from the expected output value, the distance measurement device 500 determines that a failure has been detected. The distance measurement device 500 proceeds to processing in step S106 in a case where it is determined that the failure has been detected (step S105: Yes), and proceeds to processing in step S107 in a case where it is determined that no failure is detected (step S105: No).

The distance measurement device 500 notifies the host 700 or the like of a result indicating that the failure has been detected (step S106). For example, at the time of failure detection, a predetermined output terminal (error output terminal) of the distance measurement device 500 may output a Low level signal. Furthermore, at the time of failure detection, an ON signal (High level signal) may be written in an area indicating an error status among status signals transmitted from the distance measurement device 500 to the host 700 and indicating a state of the distance measurement device 500, or information indicating an error may be written on a signal (MIPI data) output from the above-described interface 590. Note that such information may be not only notified to the host 700, but also stored in a memory or the like (not illustrated).

Note that, although it has been described above that the information indicating that the failure has been detected is notified to the host 700, the present embodiment is not limited thereto. For example, the distance measurement device 500 may give notification of detailed information such as information indicating by which one of data path check, SPAD access check, and SPAD check a failure has been detected.

The distance measurement device 500 outputs a processing result of the pixel signal acquired in above-described step S104, and ends a series of processing (step S107). Note that, in the present embodiment, as described above, the series of processing is repeatedly performed at a suitable frequency during the operation of the distance measurement device 500.

Note that, although it has been described above that a series of checks of the data path check, the SPAD access check, and the SPAD check are sequentially executed, the present embodiment is not limited thereto, and the check may be stopped when a failure is detected.

### (SPAD Access Check)

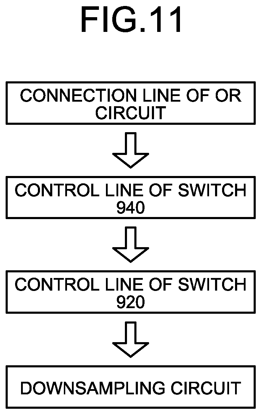

Next, details of the SPAD access check for detecting a failure of a control line according to the present embodiment will be described with reference to FIG. 11. FIG. 11 is a flowchart for describing an outline of a flow of the SPAD access check according to the present embodiment. The SPAD access check mainly detects the failure of the control line as described above.

More specifically, as illustrated in FIG. 11, check for detecting a failure of the I_SPAD line (fifth control line) that connects the OR circuit (logical add circuit) 950, the vertical control unit 572, and the like is performed first. Next, check for detecting failures of the EN_VLINE line and the EN_AREA line (second and fourth control lines) that connect the switch circuit 940 and the vertical control unit 572 and the horizontal control unit 574 of the control unit 570 is performed. Furthermore, check for detecting failures of the ACT_SPAD_V line and the ACT_SPAD_H line (first and third control lines) that connect the switch circuit 920 and the vertical control unit 572 and the horizontal control unit 574 of the control unit 570 is performed. Furthermore, check for detecting a failure of the downsampling circuit 532 is performed.

In the present embodiment, the order is not limited to the order illustrated in FIG. 11, and the order may be changed. Note that, although the check may be stopped when the failure is detected in the present embodiment, it is preferable in such a case to sequentially check whether or not there is a failure in order from the portion on the processing unit 530 side. In this way, it is possible to recognize the failure portion while shortening the check time. Hereinafter, details of each stage of the SPAD access check will be sequentially described.

### (Failure Check of I_SPAD Line)

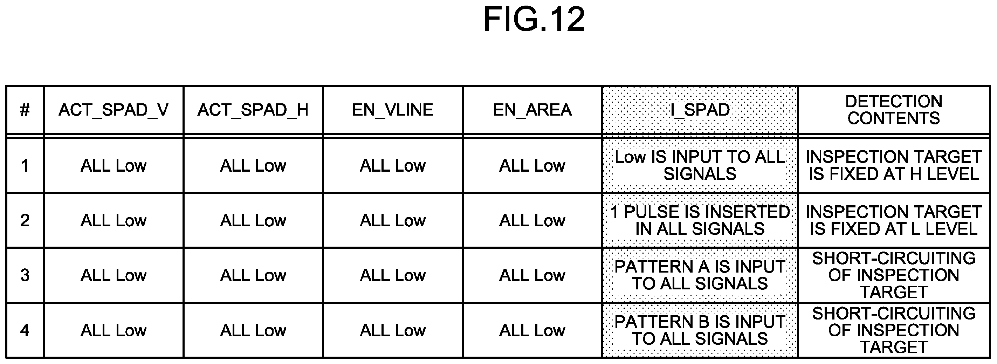

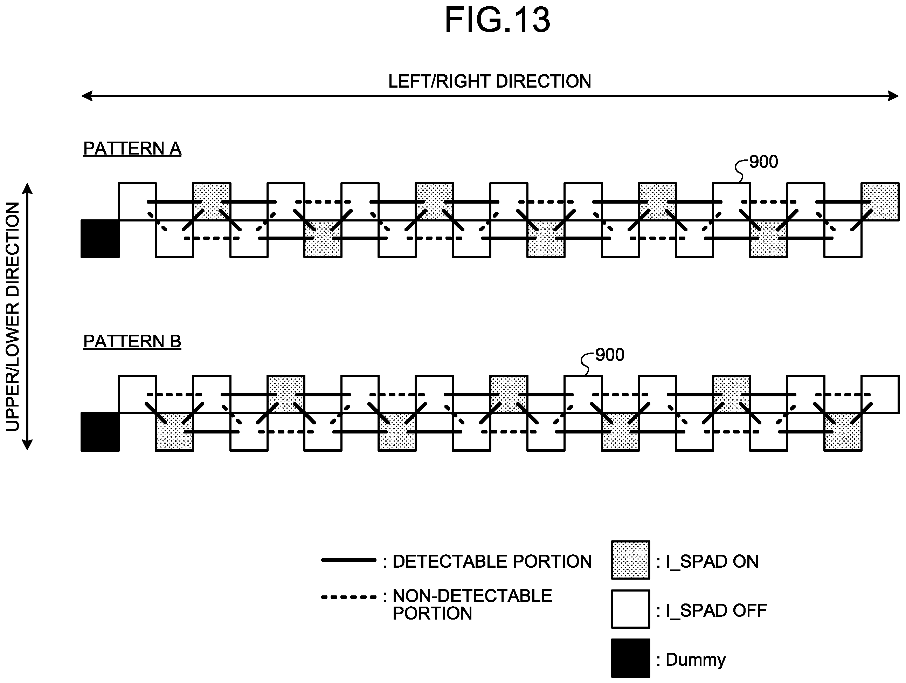

Details of the failure check of the I_SPAD line will be described with reference to FIGS. 12 and 13. FIG. 12 is a table illustrating a control signal pattern (first signal) for failure check of the I_SPAD line, and FIG. 13 is an explanatory view for describing details of the control signal pattern for failure check of the I_SPAD line.

In a test #1 in FIG. 12, all of target areas (all of the pixel circuits 900 including the I_SPAD lines) are short-circuited with the power supply voltage (High level fixing). More specifically, the control signals to the switch circuits 920 and 940 from the vertical control unit 572 and the horizontal control unit 574 via the ACT_SPAD_V line, the ACT_SPAD_H line, the EN_VLINE line, and the EN_AREA line is set to the Low level. Furthermore, the control signal to the OR circuit 950 from the vertical control unit 572 via the I_SPAD line is set to the Low level. At this time, if a pixel signal related to short-circuiting with the power supply voltage is output, it possible to check that electrical connection of the I_SPAD line is secured, that is, there is no failure.

In a test #2 in FIG. 12, all of the target areas (all of the pixel circuits 900 including the I_SPAD lines) are short-circuited with a GND (Low level fixing). More specifically, the control signals to the switch circuits 920 and 940 from the vertical control unit 572 and the horizontal control unit 574 via the ACT_SPAD_V line, the ACT_SPAD_H line, the EN_VLINE line, and the EN_AREA line is set to the Low level. Furthermore, one pulse (High level) is input as a control signal to the OR circuit 950 from the vertical control unit 572 via the I_SPAD line. At this time, if the pixel signal related to short-circuiting with the GND is output, it possible to check that electrical connection of the I_SPAD line is secured, that is, there is no failure.

In tests # 3 and 4 in FIG. 12, electrical connection of the I_SPAD line between the adjacent pixel circuits 900 is checked. For example, it is assumed that the I_SPAD lines between the plurality of pixel circuits 900 are each provided in two different layers so as not to be affected by an electrical influence. In such a case, to check failures of the I_SPAD lines that connect the upper, lower, left, and right pixel circuits 900, a plurality of signal patterns are prepared according to layers of the I_SPAD lines, and are each executed. In a case where, for example, the plurality of pixel circuits 900 are provided in the two different layers (two-layer wiring) as illustrated in FIG. 13, control signals of two patterns A and B as illustrated in FIG. 13 are used as control signals to the OR circuit 950 from the vertical control unit 572 via the I_SPAD line. More specifically, according to the pattern A, as illustrated in the upper part of FIG. 13, such a pattern is prepared that the two I_SPAD lines in the off state are provided between the I_SPAD lines in the on state among the plurality of I_SPAD lines located in the same layer, and I_SPAD lines do not have states that match with those of I_SPAD lines that are located in different layers and are adjacent. Furthermore, the pattern B is a pattern formed by horizontally shifting the pattern A one by one as illustrated in the lower part of FIG. 13. Note that portions that can be detected in each pattern are portions indicated by solid lines in FIG. 13. At this time, similarly to the previous tests, the control signals to the switch circuits 920 and 940 from the vertical control unit 572 and the horizontal control unit 574 via the ACT_SPAD_V line, the ACT_SPAD_H line, the EN_VLINE line, and the EN_AREA line are set to the Low level. By using the control signals of these two patterns, it is possible to check failures of the I_SPAD lines that that connect the upper, lower, left, and right pixel circuits. At this time, if the pixel signal related to electrical connection of the patterns A and B illustrated in FIG. 13 is output, it possible to check that electrical connection of the I_SPAD line is secured, that is, there is no failure.

Note that, in a case where the plurality of pixel circuits 900 are provided in one layer (single-layer wiring), it is sufficient to check a failure of the I_SPAD line that connects the left and right pixel circuits, and thus it is not necessary to prepare a plurality of signal patterns.

### (Failure Check of EN_VLINE Line And EN_AREA Line)

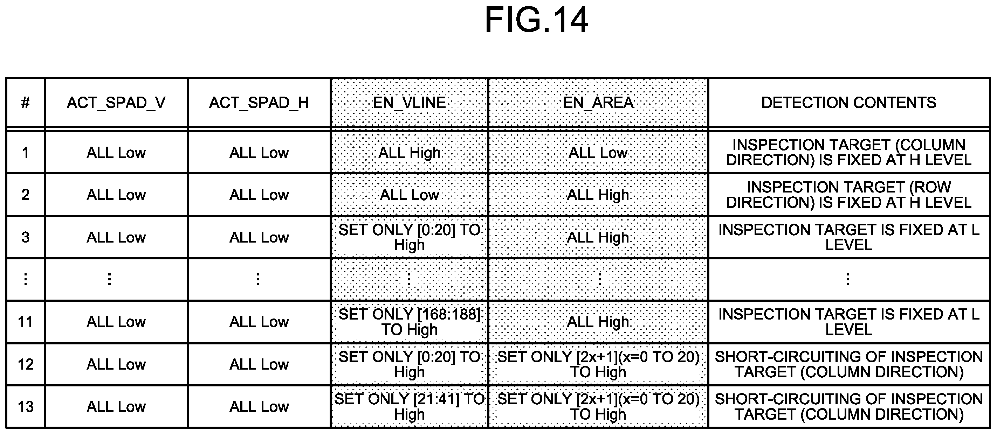

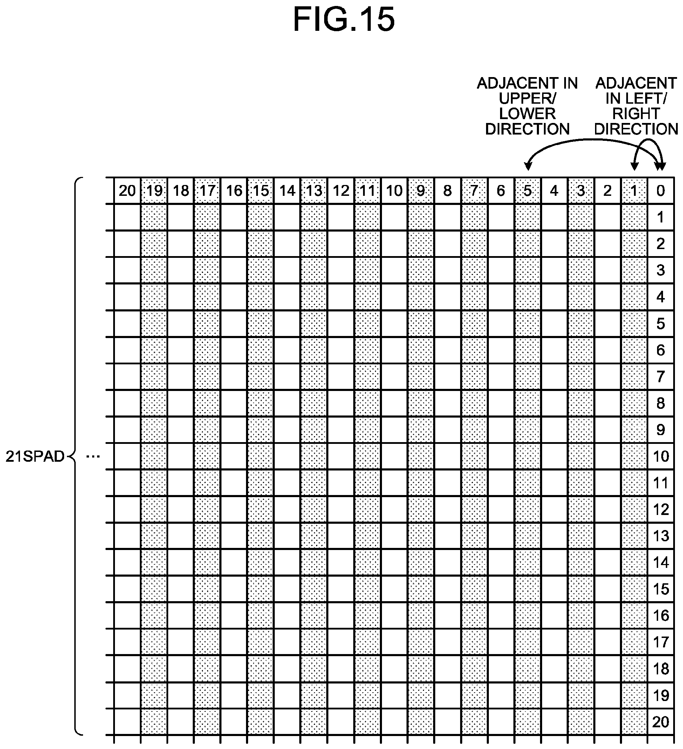

Details of failure check of the EN_VLINE line and the EN_AREA line will be described with reference to FIGS. 14 and 15. FIG. 14 is a table illustrating control signal patterns (second signals) for failure check of the EN_VLINE line and the EN_AREA line, and FIG. 15 is an explanatory view for describing details of the control signal patterns for failure check of the EN_VLINE line and the EN_AREA line.

In the test #1 in FIG. 14, the EN_VLINE line connected with the switch circuits 940 in all of the target areas (all of the pixel circuits 900) is short-circuited with the power supply voltage (High level fixing), and electrical connection between the power supply voltage and the EN_VLINE line is checked. More specifically, the control signals to the switch circuits 920 of all of the target areas (all of the pixel circuits 900) from the vertical control unit 572 and the horizontal control unit 574 via the ACT_SPAD_V lines and the ACT_SPAD_H lines are set to the Low level. Furthermore, the control signals to the switch circuits 940 of all of the target areas (all of the pixel circuits 900) from the horizontal control unit 574 via the EN_AREA lines are set to the Low level, and the control signals to the switch circuits 940 of all of the target areas (all of the pixel circuits 900) from the vertical control unit 572 via the EN_VLINE lines are set to the High level. At this time, if a pixel signal related to short-circuiting with the power supply voltage is output, it is possible to check that electrical connection of the EN_VLINE line is secured, that is, there is no failure.

In the test #2 in FIG. 14, the EN_AREA line connected with the switch circuits 940 in all of the target areas (all of the pixel circuits 900) is short-circuited with the power supply voltage (High level fixing), and electrical connection between the power supply voltage and the EN_AREA line is checked. More specifically, the control signals to the switch circuits 920 of all of the target areas (all of the pixel circuits 900) from the vertical control unit 572 and the horizontal control unit 574 via the ACT_SPAD_V lines and the ACT_SPAD_H lines are set to the Low level. Furthermore, the control signals to the switch circuits 940 of all of the target areas (all of the pixel circuits 900) from the vertical control unit 572 via the EN_VLINE lines are set to the Low level, and the control signals to the switch circuits 940 of all of the target areas (all of the pixel circuits 900) from the horizontal control unit 574 via the EN_AREA lines are set to the High level. At this time, if a pixel signal related to short-circuiting with the power supply voltage is output, it is possible to check that electrical connection of the EN_AREA line is secured, that is, there is no failure.

Next, in tests # 3 to #11 in FIG. 14, each target area of 21 columns and rows (the pixel circuits 900 of 21 rows) is short-circuited with the GND (Low level fixing). More specifically, the control signals to the switch circuits 920 of all of the target areas (all of the pixel circuits 900) from the vertical control unit 572 and the horizontal control unit 574 via the ACT_SPAD_V lines and the ACT_SPAD_H lines are set to the Low level. Furthermore, the control signal to the switch circuit 940 of each of the above target areas (the pixel circuits 900 of predetermined rows) from the vertical control unit 572 via the EN_VLINE line is set to the High level, and the control signals to the switch circuits 940 of all of the target areas (all of the pixel circuits 900) from the horizontal control unit 574 via the EN_AREA lines are set to the High level. At this time, if the pixel signal related to short-circuiting with the GND is output, it is possible to check that electrical connection of the EN_VLINE line and the EN_AREA line of the above target areas (the pixel circuits 900 of the predetermined rows) is secured, that is, there is no failure.

Next, in a test #12 in FIG. 14, electrical connection in the column direction of the target areas in the 0th row to the 20th row (the pixel circuits 900 in the 0th row to the 20th row) is checked. More specifically, the control signals to the switch circuits 920 of all of the target areas (all of the pixel circuits 900) from the vertical control unit 572 and the horizontal control unit 574 via the ACT_SPAD_V lines and the ACT_SPAD_H lines are set to the Low level. Furthermore, the control signals to the switch circuits 940 of the target areas in the 0th row to the 20th row (the pixel circuits 900 in the 0th row to the 20th row) from the vertical control unit 572 via the EN_VLINE lines are set to the High level, and the control signals to the switch circuits 940 of the odd-numbered columns (2x+1 (x = 0 to 20)) among all of the target areas (all of the pixel circuits 900) from the horizontal control unit 574 via the EN_AREA lines are set to the High level. That is, a signal pattern that outputs different pixel signals at adjacent portions (that are adjacent in an upper/lower direction and adjacent in a left/right direction) that are illustrated in FIG. 15 and at which short-circuiting may occur. At this time, if the pixel signal related to short-circuiting between the adjacent portions in the upper/lower direction and the adjacent portions in the left/right directions as illustrated in FIG. 15 is not output, it is possible to check that the EN_AREA line is not short-circuited, that is, there is no failure.

Next, similarly to #12, in a test #13 in FIG. 14, electrical connection in the column direction of the target areas in the 21th row to the 41th row (the pixel circuits 900 in the 0th row to the 20th row) is checked. More specifically, the control signals to the switch circuits 920 of all of the target areas (all of the pixel circuits 900) from the vertical control unit 572 and the horizontal control unit 574 via the ACT_SPAD_V lines and the ACT_SPAD_H lines are set to the Low level. Furthermore, the control signals to the switch circuits 940 of the target areas in the 21th row to the 41th row (the pixel circuits 900 in the 21th row to the 41th row) from the vertical control unit 572 via the EN_VLINE lines are set to the High level, and the control signals to the switch circuits 940 of the odd-numbered columns (2x+ 1 (Xx = 0 to 20)) among all of the target areas (all of the pixel circuits 900) from the horizontal control unit 574 via the EN_AREA lines are set to the High level. That is, a signal pattern that outputs different pixel signals at adjacent portions (adjacent in the upper/lower direction and adjacent in the left/right direction) that are illustrated in FIG. 15 and at which short-circuiting may occur. At this time, if the pixel signal related to short-circuiting between the adjacent portions in the upper/lower direction and the adjacent portions in the left/right directions as illustrated in FIG. 15 is not output, it is possible to check that the EN_AREA line is not short-circuited, that is, there is no failure.

### (Failure Check of ACT_SPAD_V Line and ACT_SPAD_H Line)

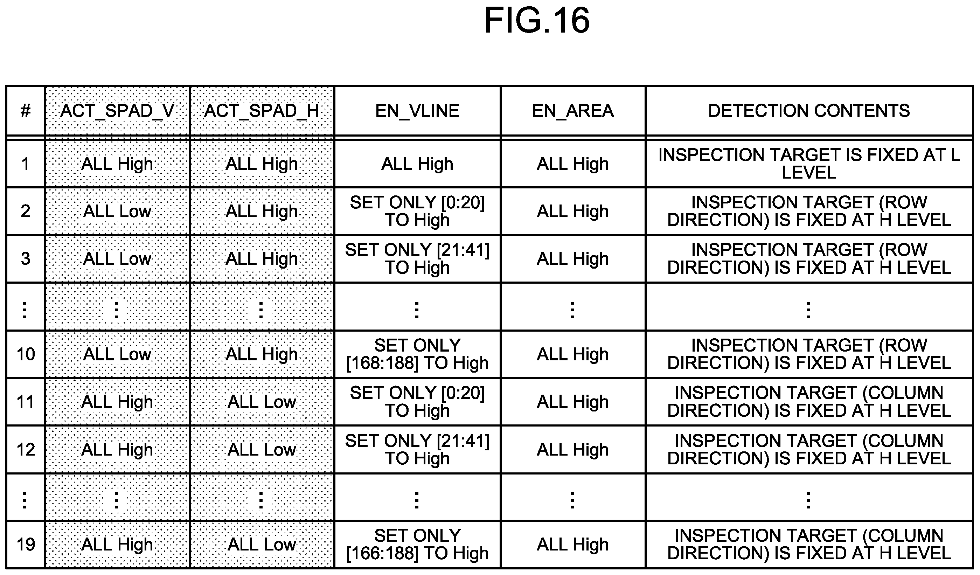

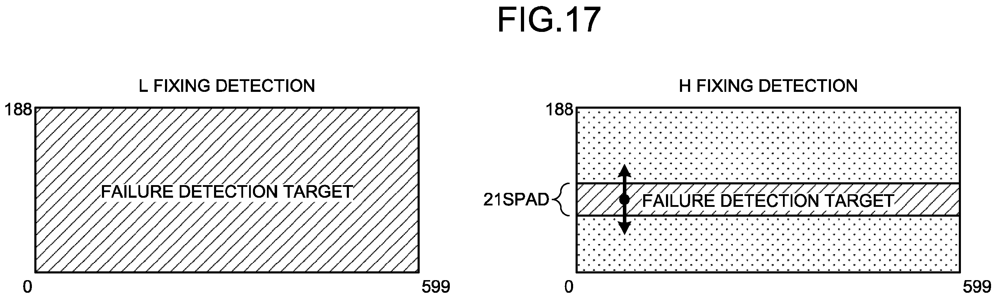

Details of the ACT_SPAD_V line and the ACT_SPAD_H line will be described with reference to FIGS. 16 and 17. FIG. 16 is a table illustrating a control signal pattern (third signal) for failure check of the ACT_SPAD_V line and the ACT_SPAD_H line, and FIG. 17 is an explanatory view for describing details of the control signal pattern for failure check of the ACT_SPAD_V line and the ACT_SPAD_H line.

Here, although electrical connection between the power supply voltage of the ACT_SPAD_V line and the ACT_SPAD_H line, and the GND is checked, a failure is determined here in a case where even one failure of the connection line is detected. As illustrated on the left side of FIG. 17, detection is performed in a state where all of the target areas (all of the pixel circuits 900) are short-circuited with the GND (Low level fixing), and, as illustrated on the right side of FIG. 17, detection is then performed in a state where a target area is short-circuited with the power supply voltage in the row direction and the column direction (High level fixing) every 21 rows of the target areas. Note that, in a case of, for example, H level fixing, a failure can be detected when a Low level signal is output.

In the test #1 in FIG. 16, as illustrated on the left side of FIG. 17, to short-circuit all of the target areas (all of the pixel circuits 900) with the GND (Low level fixing), control signals to the switch circuits 920 and 940 from the vertical control unit 572 and the horizontal control unit 574 via the ACT_SPAD_V line, the ACT_SPAD_H line, the EN_VLINE line, and the EN_AREA line are set to the High level. At this time, when the High level signal is output, it is possible to detect failures of the ACT_SPAD_H line and the ACT_SPAD_V line.

Next, in the tests #2 to #10 in FIG. 16, electrical connection with the power supply voltage in the row direction of the target areas (the pixel circuits 900 of 21 rows) for every 21 rows is checked (High level fixing). More specifically, the control signals to the switch circuits 920 of all of the target areas (all of the pixel circuits 900) from the vertical control unit 572 via the ACT_SPAD_V line are set to the Low level, and the control signals to the switch circuits 920 of all of the target areas (all of the pixel circuits 900) from the horizontal control unit 574 via the ACT_SPAD_H line are set to the High level. Furthermore, the control signals to the switch circuits 940 of the target areas (the pixel circuits 900 of 21 rows) for every 21 rows from the vertical control unit 572 via the EN_VLINE line are set to the High level, and the control signals to the switch circuits 940 of all of the target areas (all of the pixel circuits 900) from the horizontal control unit 574 via the EN_AREA line are set to the High level. At this time, in a case where the Low level signal is output, it is possible to detect a failure of the ACT_SPAD_V line of the target area.

Next, in tests #11 to #19 in FIG. 16, electrical connection with the power supply voltage in the column direction of the target areas (the pixel circuits 900 of 21 rows) for every 21 rows is checked (High level fixing). More specifically, the control signals to the switch circuits 920 of all of the target areas (all of the pixel circuits 900) from the vertical control unit 572 via the ACT_SPAD_V line are set to the High level, and the control signals to the switch circuits 920 of all of the target areas (all of the pixel circuits 900) from the horizontal control unit 574 via the ACT_SPAD_H line are set to the Low level. Furthermore, the control signals to the switch circuits 940 of the target areas (the pixel circuits 900 of 21 rows) for every 21 rows from the vertical control unit 572 via the EN_VLINE line are set to the High level, and the control signals to the switch circuits 940 of all of the target areas (all of the pixel circuits 900) from the horizontal control unit 574 via the EN_AREA line are set to the High level. At this time, in a case where the Low level signal is output, it is possible to detect a failure of the ACT_SPAD_H line of the target area.

### (Failure Check of Downsampling Circuit 532)

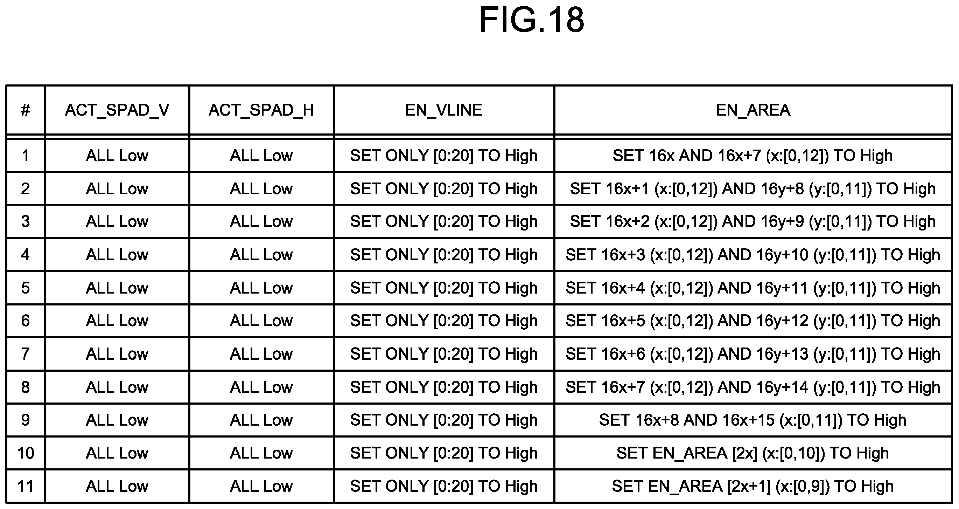

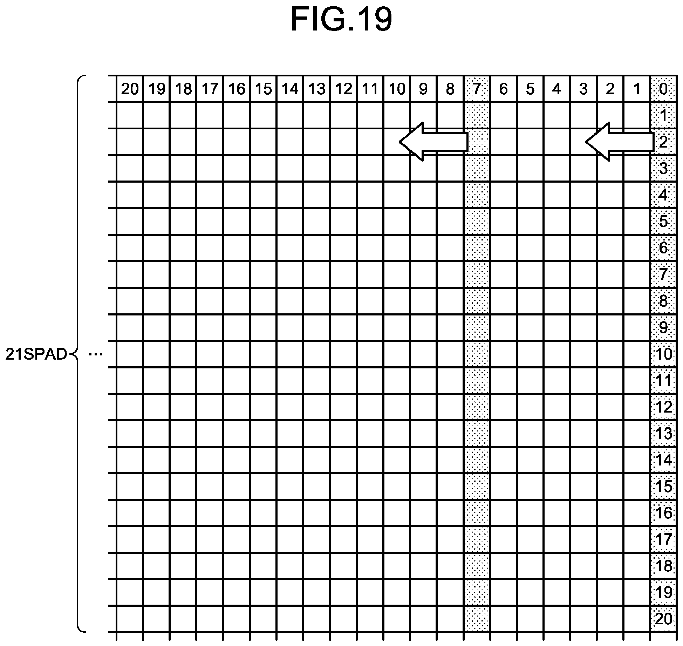

Failure check of the downsampling circuit 532 will be described with reference to FIGS. 18 and 19. FIG. 18 is a table illustrating a control signal pattern (fourth signal) for failure check of the downsampling circuit 532, and FIG. 19 is an explanatory view for describing details of the control signal pattern for failure check of failure check of the downsampling circuit 532.

Here, the failure of the downsampling circuit 532 associated with the sequentially selected target area is sequentially detected. More specifically, in tests #1 to #11 in FIG. 18, whether or not there is a failure in the column direction of target areas in the 0th row to the 20th row (the pixel circuits 900 in the 0th row to the 20th row) is sequentially checked. More specifically, in the tests #1 to #11 in FIG. 18, the control signals to the switch circuits 920 of all of the target areas (all of the pixel circuits 900) from the vertical control unit 572 and the horizontal control unit 574 via the ACT_SPAD_V line and the ACT_SPAD_H line are set to the Low level. Furthermore, the control signals to the switch circuits 940 of the target areas in the 0th row to the 20th row (the pixel circuits 900 in the 0th row to the 20th row) from the vertical control unit 572 via the EN_VLINE line are set to the High level. Furthermore, the control signal to the switch circuit 940 from the horizontal control unit 574 via the EN_AREA line is set to the High level for each of the plurality of columns. Note that, as illustrated in FIG. 19, the control signal is sequentially set to the High level per test while shifting the rows laterally. At this time, if the pixel signal matching a pattern of the control signal illustrated in FIG. 18 is output, there is no failure in the downsampling circuit 532.

### (Regarding Time of Failure Detection)

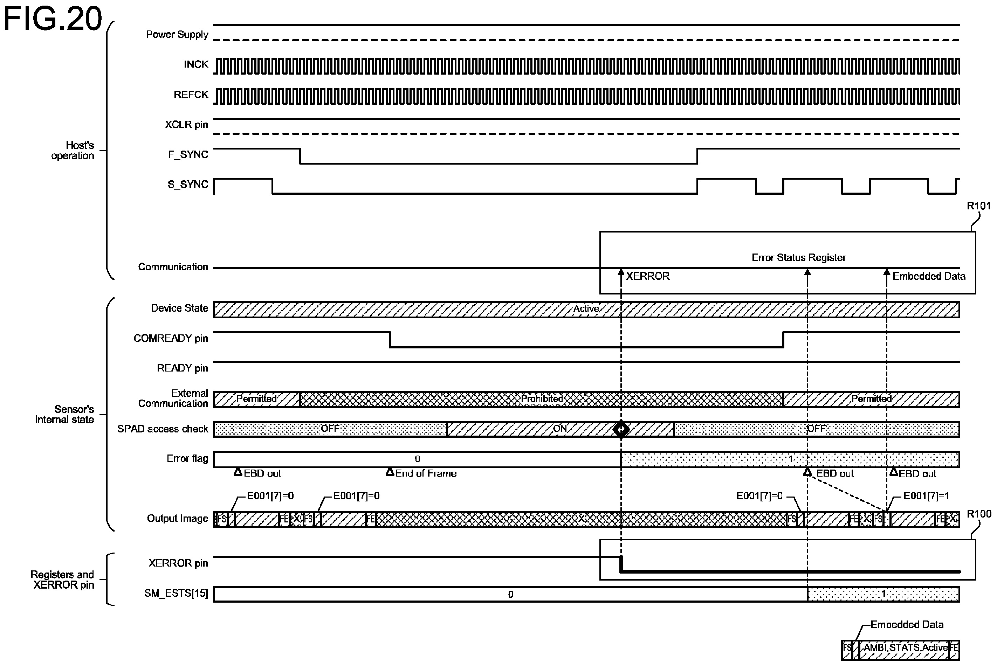

Furthermore, in the present embodiment, at the time of failure detection, only when a series of detection are performed and then a failure is detected, a signal indicating that the failure has been detected is output as described above. As indicated in, for example, an area R100 at a lower part of FIG. 20 illustrating an example of a timing chart at the time of failure detection, a predetermined output terminal (error output terminal) of the distance measurement device 500 may output a Low level signal at, for example, the time of failure detection.

Furthermore, as illustrated in, for example, an area R101 in the middle part of FIG. 20, at the time of failure detection, an ON signal (High level signal) may be written in an area indicating an error status among status signals transmitted from the distance measurement device 500 to the host 700 and indicating a state of the distance measurement device 500.

### <<3. Conclusion>>

As described above, according to the embodiment of the present disclosure, it is possible to detect a failure of a control line. More specifically, according to the present embodiment, the distance measurement device 500 alone can detect the above failure without receiving an instruction from the host 700 during the operation of the distance measurement device 500. Furthermore, in the present embodiment, it is not necessary to irradiate the light reception unit 502 (pixel array unit 510) with light, and a signal serving as a reference for determination is not acquired in advance, so that it is possible to easily detect a failure.

### <<4. Application Example>>

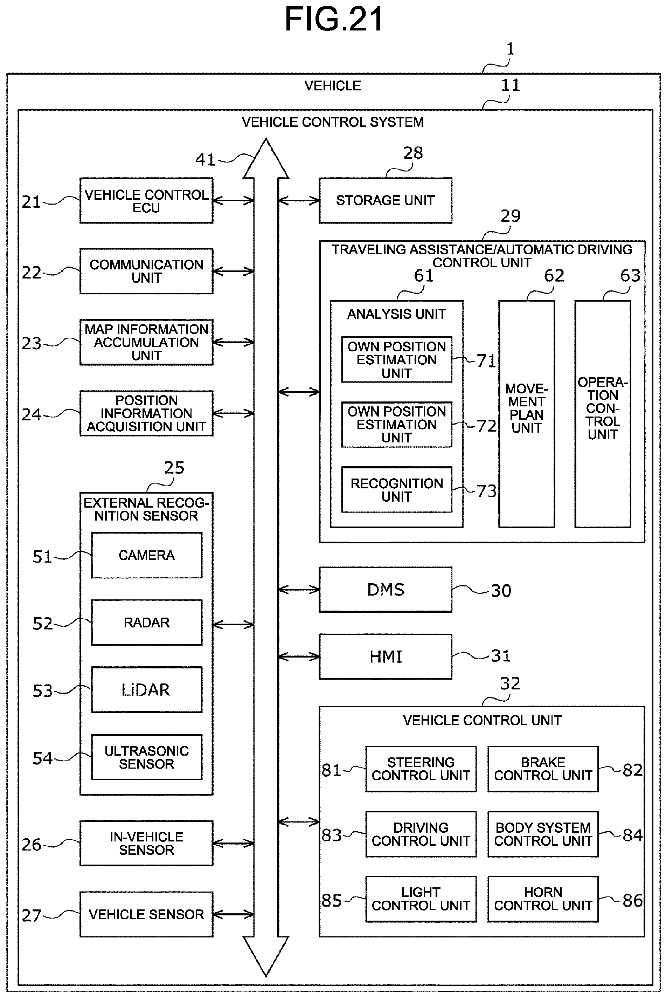

An example of a mobile device control system to which the technique proposed by the present disclosure is applicable will be above with reference to FIG. 21. FIG. 21 is a block diagram illustrating a configuration example of a vehicle control system 11 that is an example of the mobile device control system to which the technique according to the present disclosure is applicable.

The vehicle control system 11 is provided in a vehicle 1, and performs processing related to traveling assistance and automatic driving of the vehicle 1.

The vehicle control system 11 includes a vehicle control Electronic Control Unit (ECU) 21, a communication unit 22, a map information accumulation unit 23, a position information acquisition unit 24, an external recognition sensor 25, an intra-vehicle sensor 26, a vehicle sensor 27, a storage unit 28, a traveling assistance/automatic driving control unit 29, a Driver Monitoring System (DMS) 30, a Human Machine Interface (HMI) 31, and a vehicle control unit 32.

The vehicle control ECU 21, the communication unit 22, the map information accumulation unit 23, the position information acquisition unit 24, the external recognition sensor 25, the intra-vehicle sensor 26, the vehicle sensor 27, the storage unit 28, the traveling assistance/automatic driving control unit 29, the Driver Monitoring System (DMS) 30, the Human Machine Interface (HMI) 31, and the vehicle control unit 32 are communicably connected to each other via a communication network 41. The communication network 41 is configured as, for example, an in-vehicle communication network that conforms to digital bidirectional communication standards such as a Controller Area Network (CAN), a Local Interconnect Network (LIN), a Local Area Network (LAN), FlexRay (registered trademark), or the Ethernet (registered trademark), a bus, or the like. The communication network 41 may be selectively used according to the type of data to be transmitted. For example, the CAN may be applied to data related to vehicle control, and the Ethernet may be applied to large-volume data. Note that each unit of the vehicle control system 11 may be directly connected using, for example, wireless communication that assumes communication at a relatively short distance, such as Near Field Communication (NFC) or Bluetooth (registered trademark) without the communication network 41.

Note that, in a case where each unit of the vehicle control system 11 performs communication via the communication network 41, description of the communication network 41 will be omitted hereinafter. A case where, for example, the vehicle control ECU 21 and the communication unit 22 communicate via the communication network 41 will be simply described to read that the vehicle control ECU 21 and the communication unit 22 communicate.

The vehicle control ECU 21 includes, for example, various processors such as a Central Processing Unit (CPU) and a Micro Processing Unit (MPU). The vehicle control ECU 21 can control all or part of functions of the vehicle control system 11.

The communication unit 22 can communicate with various devices inside and outside the vehicle, other vehicles, servers, base stations, and the like, and transmit and receive various data. At this time, the communication unit 22 may perform communication using a plurality of communication methods.

Here, communication that can be executed by the communication unit 22 with the outside of the vehicle will be schematically described. The communication unit 22 can communicate with a server (hereinafter, referred to as an external server) or the like existing on an external network via a base station or an access point by a wireless communication method such as the 5th generation mobile communication system (5G), Long Term Evolution (LTE), or Dedicated Short Range Communications (DSRC). The external network that the communication unit 22 communicates with is, for example, the Internet, a cloud network, a network unique to a business operator, or the like. The communication method performed by the communication unit 22 with the external network is not particularly limited as long as the communication method is a wireless communication method that can perform digital bidirectional communication at a predetermined communication speed or more and at a predetermined distance equal or more.

Furthermore, for example, the communication unit 22 can communicate with a terminal that exists near an own vehicle using a Peer to Peer (P2P) technique. Examples of the terminal existing near the own vehicle include a terminal that is equipped by a moving body such as a pedestrian or a bicycle moving at a relatively low speed, a terminal that is installed in a store or the like with a position fixed, and a Machine Type Communication (MTC) terminal. Furthermore, the communication unit 22 can also perform V2X communication. The V2X communication refers to, for example, communication between the own vehicle and another vehicle or device such as vehicle to vehicle communication with another vehicle, vehicle to infrastructure communication with a roadside device or the like, vehicle to home communication, and vehicle to pedestrian communication with a terminal or the like owned by a pedestrian, and the like.

The communication unit 22 can receive from the outside, for example, a program for updating software for controlling the operation of the vehicle control system 11 (Over The Air). Furthermore, the communication unit 22 can receive map information, traffic information, information on surroundings of the vehicle 1, and the like from the outside. Furthermore, for example, the communication unit 22 can transmit information related to the vehicle 1, information on the surroundings of the vehicle 1, and the like to the outside. Examples of the information related to the vehicle 1 and transmitted to the outside by the communication unit 22 include data indicating the state of the vehicle 1, a recognition result of a recognition unit 73, and the like. Furthermore, for example, the communication unit 22 can also perform communication that supports a vehicle emergency call system such as an eCall.

For example, the communication unit 22 can receive an electromagnetic wave transmitted by a Vehicle Information and Communication System (VICS) (registered trademark) such as a radio wave beacon, an optical beacon, or FM multiplex broadcasting.

Furthermore, communication that can be executed by the communication unit 22 with a vehicle interior will be schematically described. The communication unit 22 can communicate with each device in the vehicle using, for example, wireless communication. The communication unit 22 can perform wireless communication with an in-vehicle device by a communication method that can perform digital bidirectional communication at a predetermined communication speed or more by wireless communication such as a wireless LAN, Bluetooth, NFC, or a wireless USB (WUSB). The communication unit 22 is not limited thereto, and can also communicate with each device in the vehicle using wired communication. For example, the communication unit 22 can communicate with each device in the vehicle by wired communication via a cable connected to an unillustrated connection terminal. The communication unit 22 can communicate with each device in the vehicle by a communication method that can perform digital bidirectional communication at a predetermined communication speed or more by wired communication such as a Universal Serial Bus (USB), a High-Definition Multimedia Interface (HDMI) (registered trademark), or a Mobile High-definition Link (MHL).

Here, the intra-vehicle device refers to, for example, a device that is not connected to the communication network 41 in the vehicle. Examples of the intra-vehicle device are assumed as mobile devices and wearable devices that are owned by passengers such as a driver, information devices that are brought into the vehicle and temporarily installed, and the like.

The map information accumulation unit 23 can accumulate one or both of a map acquired from the outside and a map created by the vehicle 1. For example, the map information accumulation unit 23 accumulates a three-dimensional highly accurate map, a global map that has lower accuracy and covers a wider area than the highly accurate map, and the like.

The highly accurate map is, for example, a dynamic map, a point cloud map, a vector map, or the like. The dynamic map is, for example, a map that includes four layers of dynamic information, semi-dynamic information, semi-static information, and static information, and is provided to the vehicle 1 from an external server or the like. The point cloud map is a map that includes point clouds (point cloud data). The vector map is, for example, a map that is obtained by associating, for example, traffic information such as lanes and positions of traffic lights with a point cloud map, and is adapted to an Advanced Driver Assistance System (ADAS) or Autonomous Driving (AD).

The point cloud map and the vector map may be provided from, for example, an external server or the like, or may be created by the vehicle 1 as maps to be matched with a local map to be described later based on sensing results of a camera 51, a radar 52, a LiDAR 53, or the like, and accumulated in the map information accumulation unit 23. Furthermore, in a case where the highly accurate map is provided from an external server or the like, for example, map data of several hundred square meters related to plan paths on which the vehicle 1 travels from now is acquired from the external server or the like to reduce a communications traffic.

The position information acquisition unit 24 can receive a Global Navigation Satellite System (GNSS) signal from a GNSS satellite, and acquire position information of the vehicle 1. The acquired position information is supplied to the traveling assistance/automatic driving control unit 29. Note that the position information acquisition unit 24 is not limited to a method that uses the GNSS signal, and may acquire the position information using, for example, a beacon.

The external recognition sensor 25 includes various sensors that are used for recognizing a situation outside the vehicle 1, and can supply sensor data from each sensor to each unit of the vehicle control system 11. Types and the number of sensors included in the external recognition sensor 25 are not particularly limited.

For example, the external recognition sensor 25 includes the camera 51, the radar 52, the Light Detection and Ranging or the Laser Imaging Detection and Ranging (LiDAR) 53, and an ultrasonic sensor 54. The external recognition sensor 25 is not limited thereto, and may employ a configuration including one or more types of sensors among the camera 51, the radar 52, the LiDAR 53, and the ultrasonic sensor 54. The numbers of the cameras 51, the radars 52, the LiDARs 53, and the ultrasonic sensors 54 are not particularly limited as long as the cameras 51, the radars 52, the LiDARs 53, and the ultrasonic sensors 54 can be practically installed in the vehicle 1. Furthermore, the type of a sensor included in the external recognition sensor 25 is not limited to this example, and the external recognition sensor 25 may include other types of sensors. An example of a sensing area of each sensor included in the external recognition sensor 25 will be described later.

Note that a photographing method of the camera 51 is not particularly limited. For example, cameras of various photographing methods such as a Time-of-Flight (ToF) camera, a stereo camera, a monocular camera, and an infrared camera that adopt photographing methods that can measure distances are applicable to the camera 51 as necessary. The camera 51 is not limited thereto, and may simply acquire a captured image regardless of distance measurement.

Furthermore, for example, the external recognition sensor 25 can include an environment sensor for detecting an environment for the vehicle 1. The environment sensor is a sensor for detecting an environment such as a weather, an atmospheric phenomena, and brightness, and can include various sensors such as a raindrop sensor, a fog sensor, a sunshine sensor, a snow sensor, and an illuminance sensor.

Furthermore, for example, the external recognition sensor 25 includes a microphone used for, for example, detecting a sound around the vehicle 1, a position of a sound source, and the like.

The intra-vehicle sensor 26 includes various sensors for detecting information on the vehicle interior, and can supply sensor data from each sensor to each unit of the vehicle control system 11. Types and the numbers of various sensors included in the intra-vehicle sensor 26 are not particularly limited as long as the types and the numbers of various sensors are types and the numbers that can be practically installed in the vehicle 1.

For example, the intra-vehicle sensor 26 can include one or more sensors of a camera, a radar, a seating sensor, a steering wheel sensor, a microphone, and a biosensor. As the camera included in the intra-vehicle sensor 26, for example, cameras of various photographing methods that can perform distance measurement, such as a ToF camera, a stereo camera, a monocular camera, and an infrared camera, can be used. The camera included in the intra-vehicle sensor 26 is not limited thereto, and may simply acquire a captured image regardless of distance measurement. The biosensor included in the intra-vehicle sensor 26 is provided to, for example, a seat, a steering wheel, or the like, and detects various pieces of biological information on passengers such as a driver.

The vehicle sensor 27 includes various sensors for detecting the state of the vehicle 1, and can supply sensor data from each sensor to each unit of the vehicle control system 11. Types and the numbers of various sensors included in the vehicle sensor 27 are not particularly limited as long as the types and the numbers of various sensors are types and the numbers that can be practically installed in the vehicle 1.

For example, the vehicle sensor 27 can include a speed sensor, an acceleration sensor, an angular velocity sensor (gyro sensor), and an Inertial Measurement Unit (IMU) that is obtained by integrating these sensors. For example, the vehicle sensor 27 includes a steering angle sensor that detects a steering angle of a steering wheel, a yaw rate sensor, an accelerator sensor that detects an operation amount of an accelerator pedal, and a brake sensor that detects an operation amount of a brake pedal. For example, the vehicle sensor 27 includes a rotation sensor that detects rotational speeds of an engine and a motor, an air pressure sensor that detects air pressures of tires, a slip ratio sensor that detects the slip ratio of the tire, and a wheel speed sensor that detects rotation speeds of wheels. For example, the vehicle sensor 27 includes a battery sensor that detects a remaining amount and a temperature of a battery, and an impact sensor that detects an impact from the outside.

The storage unit 28 includes at least one of a nonvolatile storage medium and a volatile storage medium, and can store data and programs. The storage unit 28 is used as, for example, an Electrically Erasable Programmable Read Only Memory (EEPROM) and a Random Access Memory (RAM), and a magnetic storage device such as a Hard Disc Drive (HDD), a semiconductor storage device, an optical storage device, and a magneto-optical storage device is applicable as the storage medium. The storage unit 28 stores various programs and data used by each unit of the vehicle control system 11. For example, the storage unit 28 includes an Event Data Recorder (EDR) and a Data Storage System for Automated Driving (DSSAD), and stores information on the vehicle 1 before and after events such as an accident, and information acquired by the intra-vehicle sensor 26.

The traveling assistance/automatic driving control unit 29 can control traveling assistance and automatic driving of the vehicle 1. For example, the traveling assistance/automatic driving control unit 29 includes an analysis unit 61, a movement plan unit 62, and an operation control unit 63.

The analysis unit 61 can perform analysis processing on the situation of the vehicle 1 and the surroundings. The analysis unit 61 includes an own position estimation unit 71, a sensor fusion unit 72, and a recognition unit 73.

The own position estimation unit 71 can estimate an own position of the vehicle 1 based on the sensor data from the external recognition sensor 25 and the highly accurate map accumulated in the map information accumulation unit 23. For example, the own position estimation unit 71 generates a local map based on the sensor data from the external recognition sensor 25, and estimates the own position of the vehicle 1 by matching the local map with the highly accurate map. The position of the vehicle 1 can be based on, for example, the center of the axle of a pair of rear wheels as a reference.

The local map is, for example, a three-dimensional highly accurate map that is created using a technique such as Simultaneous Localization and Mapping (SLAM), an occupancy grid map, or the like. The three-dimensional highly accurate map is, for example, the above-described point cloud map or the like. The occupancy grid map is a map in which a three-dimensional or two-dimensional space of the surroundings of the vehicle 1 is divided into grids (lattices) of a predetermined size, and that indicates an occupancy state of an object in units of grids. The occupancy state of the object is indicated by, for example, the presence/absence or an existence probability of the object. The local map is also used by the recognition unit 73 to perform, for example, detection processing and recognition processing on a situation outside the vehicle 1.

Note that the own position estimation unit 71 may estimate the own position of the vehicle 1 based on the position information acquired by the position information acquisition unit 24 and the sensor data from the vehicle sensor 27.

The sensor fusion unit 72 can perform sensor fusion processing of combining a plurality of different types of sensor data (e.g., image data supplied from the camera 51 and sensor data supplied from the radar 52), and obtaining new information. Methods for combining different types of sensor data include integration, fusion, federation, and the like.

The recognition unit 73 can execute detection processing of detecting a situation outside the vehicle 1, and recognition processing of recognizing the situation outside the vehicle 1.

For example, the recognition unit 73 performs the detection processing and the recognition processing on the situation outside the vehicle 1 based on information from the external recognition sensor 25, information from the own position estimation unit 71, information from the sensor fusion unit 72, and the like.

More specifically, for example, the recognition unit 73 performs detection processing, recognition processing, and the like on objects around the vehicle 1. The object detection processing refers to, for example, processing of detecting presence/absence, sizes, shapes, positions, motions, and the like of objects. The object recognition processing refers to, for example, processing of recognizing an attribute such as a type of an object or identifying a specific object. In this regard, the detection processing and the recognition processing are not necessarily clearly separated, and may overlap.

For example, the recognition unit 73 detects objects around the vehicle 1 by performing clustering for classifying point clouds that are based on the sensor data of the radar 52, the LiDAR 53, or the like into clusters of point clouds. As a result, the presence/absence, the sizes, the shapes, and the positions of the objects around the vehicle 1 are detected.

For example, the recognition unit 73 detects motions of the objects around the vehicle 1 by performing tracking for tracking the motions of the clusters of the point clouds classified by clustering. As a result, speeds and traveling directions (movement vectors) of the objects around the vehicle 1 are detected.

For example, the recognition unit 73 detects or recognizes vehicles, people, bicycles, obstacles, structures, roads, traffic lights, traffic signs, road signs, and the like based on the image data supplied from the camera 51. Furthermore, the recognition unit 73 may recognize types of the objects around the vehicle 1 by performing recognition processing such as semantic segmentation.

For example, the recognition unit 73 can perform recognition processing on traffic rules around the vehicle 1 based on the maps accumulated in the map information accumulation unit 23, the estimation result of the own position obtained by the own position estimation unit 71, and a recognition result of the objects around the vehicle 1 obtained by the recognition unit 73. This processing enables the recognition unit 73 to recognize positions and states of the traffic lights, contents of the traffic signs and the road signs, the contents of the traffic regulation, travelable lanes, and the like.

For example, the recognition unit 73 can perform recognition processing on the environment around the vehicle 1. As the recognition target environment of the surroundings for the recognition unit 73, the weather, the temperature, humidity, brightness, states of road surfaces, and the like are assumed.

The movement plan unit 62 creates a movement plan of the vehicle 1. For example, the movement plan unit 62 can create a movement plan by performing processing of global path planning and path tracking.

Note that the global path planning is processing of planning a rough path from a start to a goal. This global path planning is called trajectory planning, and also includes processing of performing local path planning that enables safe and smooth traveling near the vehicle 1 taking mobility characteristics of the vehicle 1 into account in the planned path.

Path tracking is processing of planning an operation for safely and accurately traveling a path planned by global path planning within a planned time. The movement plan unit 62 can calculate a target speed and a target angular velocity of the vehicle 1 based on, for example, a result of this path tracking processing.

The operation control unit 63 can control the operation of the vehicle 1 to achieve the movement plan created by the movement plan unit 62.

For example, the operation control unit 63 controls a steering control unit 81, a brake control unit 82, and a driving control unit 83 included in the vehicle control unit 32 to be described later, and performs acceleration/deceleration control and direction control such that the vehicle 1 travels on a trajectory calculated by trajectory planning. For example, the operation control unit 63 performs cooperative control for the purpose of implementing the functions of the ADAS such as collision avoidance or impact mitigation, tracking traveling, vehicle speed maintaining traveling, collision warning of an own vehicle, lane deviation warning of the own vehicle, and the like. For example, the operation control unit 63 performs cooperative control for the purpose of automatic driving or the like for performing autonomous traveling without depending on a driver's operation.

The DMS 30 can perform processing of authenticating the driver, processing of recognizing a driver's state, and the like based on the sensor data from the intra-vehicle sensor 26, input data input to the HMI 31 described later, and the like. As the state of the recognition target driver, for example, a physical condition, a wakefulness level, a concentration level, a fatigue level, a line-of-sight direction, a drunkenness level, a driving operation, a posture, and the like are assumed.

Note that the DMS 30 may perform processing of authenticating a passenger other than the driver, and processing of recognizing the state of the passenger. Furthermore, for example, the DMS 30 may perform processing of recognizing the situation in the vehicle based on the sensor data from the intra-vehicle sensor 26. As the recognition target situation in the vehicle, for example, the temperature, humidity, brightness, smell, and the like are assumed.

The HMI 31 can input various data, instructions, and the like, and present various data to the driver and the like.

Data input by the HMI 31 will be schematically described. The HMI 31 includes an input device for a person to input data. The HMI 31 generates an input signal based on the data, the instruction, or the like input by the input device, and supplies the input signal to each unit of the vehicle control system 11. The HMI 31 includes operators such as a touch panel, a button, a switch, and a lever as the input device. The HMI 31 is not limited thereto, and may further include an input device that can input information by methods such as a voice, a gesture, and the like other than a manual operation. Furthermore, the HMI 31 may use, for example, a remote control device that uses infrared rays or radio waves, or an external connection device such as a mobile device or a wearable device that supports the operation of the vehicle control system 11 as an input device.

Presentation of data by the HMI 31 will be schematically described. The HMI 31 generates visual information, auditory information, and tactile information for passengers or the outside of the vehicle. Furthermore, the HMI 31 performs output control for controlling output, output contents, an output timing, an output method, and the like of each generated information. The HMI 31 generates and outputs information indicated by images or light such as an operation screen, a state indication of the vehicle 1, a warning indication, a monitor image indicating a situation around the vehicle 1, and the like as the visual information. Furthermore, the HMI 31 generates and outputs information indicated by sounds such as voice guidance, a warning sound, and a warning message, and the like as the auditory information. Furthermore, the HMI 31 generates and outputs information given to the tactile sense of the passenger by, for example, a force, vibration, a motion, or the like as the tactile information.

As an output device through which the HMI 31 outputs visual information, for example, a display device that presents visual information by displaying an image by itself or a projector device that presents visual information by projecting an image is applicable. Note that, in addition to a display device having a normal display, the display device may be a device that displays visual information in the field of view of the passenger, such as a head-up display, a transmission-type display, or a wearable device having an Augmented Reality (AR) function. Furthermore, the HMI 31 can also use display devices included in a navigation device, an instrument panel, a Camera Monitoring System (CMS), an electronic mirror, a lamp, or the like provided in the vehicle 1 as output devices that output visual information.

As the output device from which the HMI 31 outputs the auditory information, for example, an audio speaker, a headphone, or an earphone is applicable.

As an output device from which the HMI 31 outputs tactile information, for example, a haptic element that uses a haptic technique is applicable. The haptic element is provided at, for example, a portion such as a steering wheel or a seat that the passenger of the vehicle 1 contacts.

The vehicle control unit 32 can control each unit of the vehicle 1. The vehicle control unit 32 includes the steering control unit 81, the brake control unit 82, the driving control unit 83, a body system control unit 84, a light control unit 85, and a horn control unit 86.

The steering control unit 81 can, for example, detect and control a state of a steering system of the vehicle 1. The steering system includes, for example, a steering mechanism that includes steering wheels and the like, an electric power steering, and the like. The steering control unit 81 includes, for example, a steering ECU that controls the steering system, an actuator that drives the steering system, and the like.

The brake control unit 82 can, for example, detect and control a state of a brake system of the vehicle 1. The brake system includes, for example, a brake mechanism that includes a brake pedal and the like, an Antilock Brake System (ABS), a regenerative brake mechanism, and the like. The brake control unit 82 includes, for example, a brake ECU that controls the brake system, an actuator that drives the brake system, and the like.

The driving control unit 83 can, for example, detect and control a state of a driving system of the vehicle 1. The driving system includes, for example, a driving force generation device for generating a driving force of an accelerator pedal, an internal combustion engine, a driving motor, or the like, a driving force transmission mechanism for transmitting the driving force to wheels, and the like. The driving control unit 83 includes, for example, a driving ECU that controls the driving system, an actuator that drives the driving system, and the like.

The body system control unit 84 can, for example, detect and control a state of a body system of the vehicle 1. The body system includes, for example, a keyless entry system, a smart key system, a power window device, power seats, an air conditioner, airbags, seat belts, a shift lever, and the like. The body system control unit 84 includes, for example, a body system ECU that controls the body system, an actuator that drives the body system, and the like.

The light control unit 85 can, for example, detect and control states of various lights of the vehicle 1. As the control target light, for example, a headlight, a backlight, a fog light, a turn signal, a brake light, a projection light, an indicator of a bumper, and the like are assumed. The light control unit 85 includes a light ECU that controls the light, an actuator that drives the light, and the like.

The horn control unit 86 can, for example, detect and control a state of a car horn of the vehicle 1. The horn control unit 86 includes, for example, a horn ECU that controls the car horn, an actuator that drives the car horn, and the like.

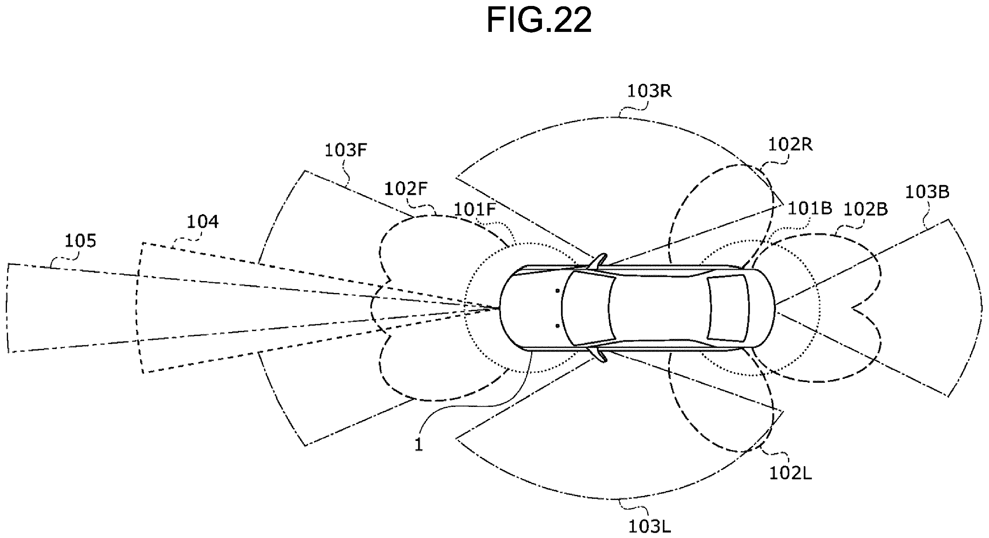

FIG. 22 is a view illustrating an example of sensing areas of the camera 51, the radar 52, the LiDAR 53, the ultrasonic sensor 54, and the like of the external recognition sensor 25 in FIG. 21. Note that FIG. 22 schematically illustrates the vehicle 1 from above, and the left end side is the front end (front) side of the vehicle 1 and the right end side is the rear end (rear) side of the vehicle 1.

A sensing area 101F and a sensing area 101B indicate examples of the sensing areas of the ultrasonic sensor 54. The sensing area 101F covers the periphery of the front end of the vehicle 1 by the plurality of ultrasonic sensors 54. The sensing area 101B covers the periphery of the rear end of the vehicle 1 by the plurality of ultrasonic sensors 54.

The sensing results in the sensing area 101F and the sensing area 101B are used to, for example, assist parking of the vehicle 1.

A sensing area 102F or a sensing area 102B indicates an example of a sensing area of the radar 52 for a short distance or a middle distance. The sensing area 102F covers a position farther than the sensing area 101F in front of the vehicle 1. The sensing area 102B covers a position farther than the sensing area 101B at the back of the vehicle 1. A sensing area 102L covers surroundings at the back of the left side surface of the vehicle 1. A sensing area 102R covers surroundings at the back of the right side surface of the vehicle 1.

A sensing result in the sensing area 102F is used to, for example, detect a vehicle, a pedestrian, or the like existing in front of the vehicle 1. A sensing result in the sensing area 102B is used for, for example, a collision prevention function at the back of the vehicle 1 or the like. Sensing results in the sensing area 102L and the sensing area 102R are used to, for example, detect an object in a blind spot at the side of the vehicle 1.

A sensing area 103F to a sensing area 103B indicate examples of sensing areas by the camera 51. The sensing area 103F covers a position farther than the sensing area 102F in front of the vehicle 1. The sensing area 103B covers a position farther than the sensing area 102B at the back of the vehicle 1. A sensing area 103L covers surroundings of the left side surface of the vehicle 1. A sensing area 103R covers surroundings of the right side surface of the vehicle 1.

A sensing result in the sensing area 103F can be used for, for example, recognition of traffic lights or traffic signs, a lane deviation prevention assist system, and an automatic headlight control system. A sensing result in the sensing area 103B can be used for, for example, parking assistance and a surround view system. Sensing results in the sensing area 103L and the sensing area 103R can be used for the surround view system, for example.

A sensing area 104 indicates an example of a sensing area of the LiDAR 53. The sensing area 104 covers a position farther than the sensing area 103F in front of the vehicle 1. On the other hand, the sensing area 104 has a narrower range in the left/right direction than the sensing area 103F.

A sensing result in the sensing area 104 is used to, for example, detect objects such as surrounding vehicles.

A sensing area 105 indicates an example of the sensing area of the long-range radar 52. The sensing area 105 covers a position farther than the sensing area 104 in front of the vehicle 1. On the other hand, the sensing area 105 has a narrower range in the left/right direction than the sensing area 104.

A sensing result in the sensing area 105 is used for, for example, Adaptive Cruise Control (ACC), emergency brake, collision avoidance, and the like.

Note that the sensing areas of the sensors of the camera 51, the radar 52, the LiDAR 53, and the ultrasonic sensor 54 included in the external recognition sensor 25 may employ various configurations other than those in FIG. 22. More specifically, the ultrasonic sensor 54 may also sense the sides of the vehicle 1, or the LiDAR 53 may sense the rear side of the vehicle 1. Furthermore, the installation position of each sensor is not limited to each of the above-described examples. Furthermore, the number of each sensor may be one or plural.

The technique according to the present disclosure is applicable to, for example, the LiDAR 53 or the like. For example, by applying the technique according to the present disclosure to the LiDAR 53 of the vehicle control system 11, it is possible to easily detect a failure occurring in the LiDAR 53, so that it is possible to prevent malfunction and erroneous detection of the LiDAR 53. Consequently, the LiDAR 53 can normally detect surrounding vehicles or the like, so that it is possible to secure traveling safety of the vehicle 1.

### Reference Signs List

- 1: VEHICLE
- 11: VEHICLE CONTROL SYSTEM
- 21: VEHICLE CONTROL ELECTRONIC CONTROL UNIT (ECU)
- 22: COMMUNICATION UNIT
- 23: MAP INFORMATION ACCUMULATION UNIT
- 24: POSITION INFORMATION ACQUISITION UNIT
- 25: EXTERNAL RECOGNITION SENSOR
- 26: INTRA-VEHICLE SENSOR
- 27: VEHICLE SENSOR
- 28: STORAGE UNIT
- 29: TRAVELING ASSISTANCE/AUTOMATIC DRIVING CONTROL UNIT
- 30: DRIVER MONITORING SYSTEM (DMS)
- 31: HUMAN MACHINE INTERFACE (HMI)
- 32: VEHICLE CONTROL UNIT
- 41: COMMUNICATION NETWORK
- 51: CAMERA
- 52: RADAR
- 53: LiDAR
- 54: ULTRASONIC SENSOR
- 61: ANALYSIS UNIT
- 62: MOVEMENT PLAN UNIT
- 63: OPERATION CONTROL UNIT
- 71: OWN POSITION ESTIMATION UNIT
- 72: SENSOR FUSION UNIT
- 73: RECOGNITION UNIT
- 81: STEERING CONTROL UNIT
- 82: BRAKE CONTROL UNIT
- 83: DRIVING CONTROL UNIT
- 84: BODY SYSTEM CONTROL UNIT
- 85: LIGHT CONTROL UNIT
- 86: HORN CONTROL UNIT
- 90: DISTANCE MEASUREMENT SYSTEM
- 200, 250: SEMICONDUCTOR SUBSTRATE
- 252: LOGIC ARRAY UNIT
- 300, 500: DISTANCE MEASUREMENT DEVICE
- 301, 400: LIGHT SOURCE UNIT
- 302, 502: LIGHT RECEPTION UNIT
- 303: MEASUREMENT TARGET
- 310: FREQUENCY
- 311: RANGE
- 312: ACTIVE LIGHT COMPONENT
- 510: PIXEL ARRAY UNIT
- 512: SPAD
- 530: PROCESSING UNIT
- 532: DOWNSAMPLING CIRCUIT
- 534: FAILURE DETERMINATION UNIT
- 540: CONVERSION UNIT
- 550: GENERATION UNIT
- 560: SIGNAL PROCESSING UNIT
- 570: CONTROL UNIT
- 572: VERTICAL CONTROL UNIT
- 574: HORIZONTAL CONTROL UNIT
- 576: CONTROL SIGNAL GENERATION UNIT
- 580: LIGHT EMISSION TIMING CONTROL UNIT
- 590: INTERFACE
- 600: STORAGE DEVICE
- 700: HOST
- 800: OPTICAL SYSTEM
- 900: PIXEL CIRCUIT
- 902, 904: TRANSISTOR
- 910: CONSTANT CURRENT SOURCE
- 920, 940: SWITCH CIRCUIT
- 930: INVERTER CIRCUIT
- 950: OR CIRCUIT
- R100, R101: AREA

## Claims

1. A photodetection device (500) comprising:
a light reception unit (302, 502) that includes a pixel array unit (510) including a plurality of light reception elements (512) aligned in a matrix, wherein each light reception element (512) is an avalanche photodiode;
a control signal generation unit (576) configured to generate a control signal;
a control unit (570) that is electrically connected with each light reception element (512) of the plurality of light reception elements (512) of the light reception unit (302, 502) via a control line and configured to control the light reception unit (302, 502) based on the control signal;
a processing unit (530) that is electrically connected with each light reception element (512) of the plurality of light reception elements (512) of the light reception unit (302, 502) via a signal line and is configured to process an output signal from the light reception unit (302, 502) to obtain distance information by a time-of-flight method in a normal measurement mode; and
a failure determination unit (534) configured to detect a failure,
wherein the failure determination unit (534) is configured to detect a failure of the control line from the output signal from the same light reception elements (512), that are used in the normal measurement mode for said distance measurement, the light reception element (512) being controlled based on a failure detection control signal having a predetermined pattern.

2. The photodetection device (500) according to claim 1, wherein the light reception unit (302, 502) includes:
a driving switch (920) that is provided for each of the light reception elements (512) and is configured to drive the light reception element (512);
an output switch (940) that is provided for each of the light reception elements (512) and is configured to control output of an output signal from the light reception element (512); and
a logical add circuit (950) configured to provide an output according to the output signal from each of the light reception elements (512) and an output signal from another light reception element (512) of the plurality of light reception elements (512).

3. The photodetection device (500) according to claim 2, wherein the control unit (570) includes:
a horizontal control unit (574) configured to control the light reception elements (512) in units of columns; and
a vertical control unit (572) configured to control the light reception elements (512) in units of rows.

4. The photodetection device (500) according to claim 3, wherein the control line includes:
a first control line (ACT_SPAD_V) that electrically connects the vertical control unit (572) and the driving switch (920);
a second control line (EN_VLINE) that electrically connects the vertical control unit (572) and the output switch (940);
a third control line (ACT_SPAD_H) that electrically connects the horizontal control unit (574) and the driving switch (920);
a fourth control line (EN_AREA) that electrically connects the horizontal control unit (574) and the output switch (940); and
a fifth control line (I_SPAD) that electrically connects the vertical control unit (572) and the logical add circuit (950).

5. The photodetection device (500) according to claim 4, wherein the processing unit (530) includes a downsampling circuit (532).

6. The photodetection device (500) according to claim 5, wherein the control signal generation unit (576) is configured to output the failure detection control signal while a frame synchronization signal is inactive.

7. The photodetection device (500) according to claim 6, wherein a processing unit failure detection signal for detecting a failure of the processing unit (530), and a control line failure detection signal for detecting the failure of the control line are included in order in the failure detection control signal.

8. The photodetection device (500) according to claim 7, wherein, before or after the control line failure detection signal, a light reception unit failure detection signal for detecting a failure of the light reception unit (302, 502) is included in the failure detection control signal.

9. The photodetection device (500) according to claim 8, wherein the control line failure detection signal includes a first signal for detecting a failure of the fifth control line (I_SPAD).

10. The photodetection device (500) according to claim 9, wherein:
the control line failure detection signal includes a second signal for detecting failures of the second (EN_VLINE) and fourth (EN_AREA) control lines, and wherein
the control line failure detection signal includes a third signal for detecting failures of the first (ACT_SPAD_V) and third (ACT_SPAD_H) control lines.

11. The photodetection device (500) according to claim 10, wherein:
the control line failure detection signal includes a fourth signal for detecting a failure of the downsampling circuit (532), or wherein
the control line failure detection signal includes a fourth signal for detecting a failure of the downsampling circuit and the control line failure detection signal includes each of the first signal, the second signal, the third signal, and the fourth signal in order.

12. The photodetection device (500) according to claim 1, wherein the photodetection device (500) is formed by a first substrate (200) on which the pixel array unit (510) is provided, and
a second substrate (250) stacked on the first substrate and provided with the control unit (570), the processing unit (530), and the failure determination unit (534).

13. The photodetection device (500) according to claim 12, wherein the control line is provided on the second substrate (250).

14. A distance measurement system (90) comprising:
a lighting device (301, 400) configured to emit irradiation light; and
the photodetection device of any one of the previous claims configured to receive reflected light obtained when the irradiation light is reflected by a subject.

## Patentansprüche

1. Photodetektionsvorrichtung (500), umfassend:
eine Lichtempfangseinheit (302, 502), die eine Pixelarray-Einheit (510) einschließt, die eine Vielzahl von Lichtempfangselementen (512) einschließt, die in einer Matrix angeordnet sind, wobei jedes Lichtempfangselement (512) eine Lawinenphotodiode ist;
eine Steuersignalerzeugungseinheit (576), die konfiguriert ist, um ein Steuersignal zu erzeugen;
eine Steuereinheit (570), die über eine Steuerleitung mit jedem Lichtempfangselement (512) der Vielzahl von Lichtempfangselementen (512) der Lichtempfangseinheit (302, 502) elektrisch verbunden ist und konfiguriert ist, um die Lichtempfangseinheit (302, 502) basierend auf dem Steuersignal zu steuern;
eine Verarbeitungseinheit (530), die über eine Signalleitung elektrisch mit jedem Lichtempfangselement (512) der Vielzahl von Lichtempfangselementen (512) der Lichtempfangseinheit (302, 502) verbunden ist und konfiguriert ist, um ein Ausgangssignal von der Lichtempfangseinheit (302, 502) zu verarbeiten, um Entfernungsinformationen durch ein Flugzeitverfahren in einem normalen Messmodus zu erhalten; und
eine Fehlerbestimmungseinheit (534), die konfiguriert ist, um einen Fehler zu detektieren,
wobei die Fehlerbestimmungseinheit (534) konfiguriert ist, um einen Fehler der Steuerleitung von dem Ausgangssignal von denselben Lichtempfangselementen (512) zu detektieren, die in dem normalen Messmodus für die Entfernungsmessung verwendet werden, wobei das Lichtempfangselement (512) basierend auf einem Fehlerdetektionssteuersignal mit einem vorbestimmten Muster gesteuert wird.

2. Photodetektionsvorrichtung (500) nach Anspruch 1, wobei die Lichtempfangseinheit (302, 502) einschließt:
einen Ansteuerschalter (920), der für jedes der Lichtempfangselemente (512) bereitgestellt ist und konfiguriert ist, um das Lichtempfangselement (512) anzusteuern;
einen Ausgangsschalter (940), der für jedes der Lichtempfangselemente (512) bereitgestellt ist und konfiguriert ist, um die Ausgabe eines Ausgangssignals von dem Lichtempfangselement (512) zu steuern; und
eine logische Addierschaltung (950), die konfiguriert ist, um eine Ausgabe gemäß dem Ausgangssignal von jedem der Lichtempfangselemente (512) und einem Ausgangssignal von einem anderen Lichtempfangselement (512) der Vielzahl von Lichtempfangselementen (512) bereitzustellen.

3. Photodetektionsvorrichtung (500) nach Anspruch 2, wobei die Steuereinheit (570) einschließt:
eine horizontale Steuereinheit (574), die konfiguriert ist, um die Lichtempfangselemente (512) in Einheiten von Spalten zu steuern; und
eine vertikale Steuereinheit (572), die konfiguriert ist, um die Lichtempfangselemente (512) in Einheiten von Zeilen zu steuern.

4. Photodetektionsvorrichtung (500) nach Anspruch 3, wobei die Steuerleitung einschließt:
eine erste Steuerleitung (ACT_SPAD_V), die die vertikale Steuereinheit (572) und den Ansteuerschalter (920) elektrisch verbindet;
eine zweite Steuerleitung (EN_VLINE), die die vertikale Steuereinheit (572) und den Ausgangsschalter (940) elektrisch verbindet;
eine dritte Steuerleitung (ACT_SPAD_H), die die horizontale Steuereinheit (574) und den Ansteuerschalter (920) elektrisch verbindet;
eine vierte Steuerleitung (EN_AREA), die die horizontale Steuereinheit (574) und den Ausgangsschalter (940) elektrisch verbindet; und
eine fünfte Steuerleitung (I_SPAD), die die vertikale Steuereinheit (572) und die logische Addierschaltung (950) elektrisch verbindet.

5. Photodetektionsvorrichtung (500) nach Anspruch 4, wobei die Verarbeitungsschaltung (530) eine Downsampling-Schaltung (532) einschließt.

6. Photodetektionsvorrichtung (500) nach Anspruch 5, wobei die Steuersignalerzeugungseinheit (576) konfiguriert ist, um das Fehlerdetektionssteuersignal auszugeben, während ein Rahmensynchronisationssignal inaktiv ist.

7. Photodetektionsvorrichtung (500) nach Anspruch 6, wobei ein Verarbeitungseinheitsfehlerdetektionssignal zum Detektieren eines Fehlers der Verarbeitungseinheit (530) und ein Steuerleitungsfehlerdetektionssignal zum Erkennen des Fehlers der Steuerleitung in dieser Reihenfolge in dem Fehlerdetektionssteuersignal enthalten sind.

8. Photodetektionsvorrichtung (500) nach Anspruch 7, wobei vor oder nach dem Steuerleitungsfehlerdetektionssignal ein Lichtempfangseinheitsfehlerdetektionssignal zum Detektieren eines Fehlers der Lichtempfangseinheit (302, 502) in dem Fehlerdetektionssteuersignal enthalten ist.

9. Photodetektionsvorrichtung (500) nach Anspruch 8, wobei das Steuerleitungsfehlerdetektionssignal ein erstes Signal zum Detektieren eines Fehlers der fünften Steuerleitung (I_SPAD) einschließt.

10. Photodetektionsvorrichtung (500) nach Anspruch 9, wobei:
das Steuerleitungsfehlerdetektionssignal ein zweites Signal zum Detektieren von Fehlern der zweiten (EN_VLINE) und vierten (EN_AREA) Steuerleitungen einschließt, und wobei
das Steuerleitungsfehlerdetektionssignal ein drittes Signal zum Detektieren von Fehlern der ersten (ACT_SPAD_V) und dritten (ACT_SPAD_H) Steuerleitungen einschließt.

11. Photodetektionsvorrichtung (500) nach Anspruch 10, wobei:
das Steuerleitungsfehlerdetektionssignal ein viertes Signal zum Detektieren eines Fehlers der Downsampling-Schaltung (532) einschließt, oder wobei
das Steuerleitungsfehlerdetektionssignal ein viertes Signal zum Detektieren eines Fehlers der Downsampling-Schaltung einschließt, und das Steuerleitungsfehlerdetektionssignal jeweils das erste Signal, das zweite Signal, das dritte Signal und das vierte Signal der Reihe nach einschließt.

12. Photodetektionsvorrichtung (500) nach Anspruch 1, wobei die Photodetektionsvorrichtung (500) durch ein erstes Substrat (200) gebildet ist, auf dem die Pixelarray-Einheit (510) bereitgestellt ist, und
ein zweites Substrat (250), das auf das erste Substrat gestapelt ist und mit der Steuereinheit (570), der Verarbeitungseinheit (530) und der Fehlerbestimmungseinheit (534) bereitgestellt wird.

13. Photodetektionsvorrichtung (500) nach Anspruch 12, wobei die Steuerleitung auf dem zweiten Substrat (250) bereitgestellt ist.

14. Entfernungsmesssystem (90), umfassend:
eine Beleuchtungsvorrichtung (301, 400), die konfiguriert ist, um Strahlungslicht zu emittieren; und
Photodetektionsvorrichtung nach einem der vorstehenden Ansprüche, die konfiguriert ist, um reflektiertes Licht zu empfangen, das erhalten wird, wenn das Strahlungslicht von einem Subjekt reflektiert wird.

## Revendications

1. Dispositif de photodétection (500) comprenant :
une unité de réception de lumière (302, 502) qui comporte une unité de réseau de pixels (510) comportant une pluralité d'éléments de réception de lumière (512) alignés dans une matrice, dans lequel chaque élément de réception de lumière (512) est une photodiode à avalanche ;
une unité de génération de signal de commande (576) configurée pour générer un signal de commande ;
une unité de commande (570) qui est connectée électriquement à chaque élément de réception de lumière (512) de la pluralité d'éléments de réception de lumière (512) de l'unité de réception de lumière (302, 502) par l'intermédiaire d'une ligne de commande et configurée pour commander l'unité de réception de lumière (302, 502) en fonction du signal de commande ;
une unité de traitement (530) qui est connectée électriquement à chaque élément de réception de lumière (512) de la pluralité d'éléments de réception de lumière (512) de l'unité de réception de lumière (302, 502) par l'intermédiaire d'une ligne de signal et est configurée pour traiter un signal de sortie provenant de l'unité de réception de lumière (302, 502) pour obtenir des informations de distance par un procédé de temps de vol dans un mode de mesure normal ; et
une unité de détermination de défaillance (534) configurée pour détecter une défaillance,
dans lequel l'unité de détermination de défaillance (534) est configurée pour détecter une défaillance de la ligne de commande à partir du signal de sortie provenant des mêmes éléments de réception de lumière (512), que ceux utilisés dans le mode de mesure normal pour ladite mesure de distance, l'élément de réception de lumière (512) étant commandé en fonction d'un signal de commande de détection de défaillance ayant un profil prédéterminé.

2. Dispositif de photodétection (500) selon la revendication 1, dans lequel l'unité de réception de lumière (302, 502) comporte :
un commutateur de pilotage (920) qui est fourni pour chacun des éléments de réception de lumière (512) et est conçu pour piloter l'élément de réception de lumière (512) ;
un commutateur de sortie (940) qui est fourni pour chacun des éléments de réception de lumière (512) et est configuré pour commander la sortie d'un signal de sortie provenant de l'élément de réception de lumière (512) ; et
un circuit d'addition logique (950) configuré pour fournir une sortie selon le signal de sortie provenant de chacun des éléments de réception de lumière (512) et un signal de sortie provenant d'un autre élément de réception de lumière (512) de la pluralité d'éléments de réception de lumière (512).

3. Dispositif de photodétection (500) selon la revendication 2, dans lequel l'unité de commande (570) comporte :
une unité de commande horizontale (574) configurée pour commander les éléments de réception de lumière (512) en unités de colonnes ; et
une unité de commande verticale (572) configurée pour commander les éléments de réception de lumière (512) en unités de rangées.

4. Dispositif de photodétection (500) selon la revendication 3, dans lequel la ligne de commande comporte :
une première ligne de commande (ACT_SPAD_V) qui connecte électriquement l'unité de commande verticale (572) et le commutateur de pilotage (920) ;
une deuxième ligne de commande (EN_VLINE) qui connecte électriquement l'unité de commande verticale (572) et le commutateur de sortie (940) ;
une troisième ligne de commande (ACT_SPAD_H) qui connecte électriquement l'unité de commande horizontale (574) et le commutateur de pilotage (920) ;
une quatrième ligne de commande (EN_AREA) qui connecte électriquement l'unité de commande horizontale (574) et le commutateur de sortie (940) ; et
une cinquième ligne de commande (I_SPAD) qui connecte électriquement l'unité de commande verticale (572) et le circuit d'addition logique (950).

5. Dispositif de photodétection (500) selon la revendication 4, dans lequel l'unité de traitement (530) comporte un circuit de sous-échantillonnage (532).

6. Dispositif de photodétection (500) selon la revendication 5, dans lequel l'unité de génération de signal de commande (576) est configurée pour délivrer en sortie le signal de commande de détection de défaillance alors qu'un signal de synchronisation de trame est inactif.

7. Dispositif de photodétection (500) selon la revendication 6, dans lequel un signal de détection de défaillance d'unité de traitement permettant de détecter une défaillance de l'unité de traitement (530), et un signal de détection de défaillance de ligne de commande permettant de détecter la défaillance de la ligne de commande sont inclus dans l'ordre dans le signal de commande de détection de défaillance.

8. Dispositif de photodétection (500) selon la revendication 7, dans lequel, avant ou après le signal de détection de défaillance de ligne de commande, un signal de détection de défaillance d'unité de réception de lumière permettant de détecter une défaillance de l'unité de réception de lumière (302, 502) est inclus dans le signal de commande de détection de défaillance.

9. Dispositif de photodétection (500) selon la revendication 8, dans lequel le signal de détection de défaillance de ligne de commande comporte un premier signal permettant de détecter une défaillance de la cinquième ligne de commande (I_SPAD).

10. Dispositif de photodétection (500) selon la revendication 9, dans lequel :
le signal de détection de défaillance de ligne de commande comporte un deuxième signal permettant de détecter des défaillances des deuxième (EN_VLINE) et quatrième (EN_AREA) lignes de commande, et dans lequel
le signal de détection de défaillance de ligne de commande comporte un troisième signal permettant de détecter des défaillances des première (ACT_SPAD_V) et troisième (ACT_SPAD_H) lignes de commande.

11. Dispositif de photodétection (500) selon la revendication 10, dans lequel :
le signal de détection de défaillance de ligne de commande comporte un quatrième signal permettant de détecter une défaillance du circuit de sous-échantillonnage (532), ou dans lequel
le signal de détection de défaillance de ligne de commande comporte un quatrième signal permettant de détecter une défaillance du circuit de sous-échantillonnage et le signal de détection de défaillance de ligne de commande comporte chacun du premier signal, du deuxième signal, du troisième signal et du quatrième signal dans l'ordre.

12. Dispositif de photodétection (500) selon la revendication 1, dans lequel le dispositif de photodétection (500) est formé par un premier substrat (200) sur lequel l'unité de réseau de pixels (510) est fournie, et
un second substrat (250) empilé sur le premier substrat et pourvu de l'unité de commande (570), de l'unité de traitement (530) et de l'unité de détermination de défaillance (534).

13. Dispositif de photodétection (500) selon la revendication 12, dans lequel la ligne de commande est fournie sur le second substrat (250).

14. Système de mesure de distance (90) comprenant :
un dispositif d'éclairage (301, 400) configuré pour émettre de la lumière d'irradiation ; et
le dispositif de photodétection selon l'une quelconque des revendications précédentes configuré pour recevoir de la lumière réfléchie obtenue lorsque la lumière d'irradiation est réfléchie par un sujet.
